(19) Europäisches Patentamt
European Patent Office
Office européen des brevets

(11) EP 1 360 227 B1

(12) FASCICULE DE BREVET EUROPEEN

(45) Date de publication et mention de la délivrance du brevet:
**23.05.2007 Bulletin 2007/21**

(21) Numéro de dépôt: **01986923.9**

(22) Date de dépôt: **20.12.2001**

(51) Int Cl.:
***C08K 3/34*** *(2006.01)* ***C08L 21/00*** *(2006.01)*
***B60C 1/00*** *(2006.01)*

(86) Numéro de dépôt international:
**PCT/EP2001/015165**

(87) Numéro de publication internationale:
**WO 2002/053634 (11.07.2002 Gazette 2002/28)**

(54) **COMPOSITION DE CAOUTCHOUC A BASE D'ELASTOMERE DIENIQUE ET D'UN CARBURE DE SILICIUM RENFORCANT**

KAUTSCHUKMISCHUNG AUF DER BASIS EINES DIENELASTOMERS UND EINES VERSTÄRKENDEN SILICIUMCARBIDS

RUBBER COMPOSITION MADE WITH DIENE ELASTOMER AND A REINFORCING SILICON CARBIDE

(84) Etats contractants désignés:
**AT BE CH CY DE DK ES FI FR GB GR IE IT LI LU MC NL PT SE TR**

(30) Priorité: **02.01.2001 FR 0100049**

(43) Date de publication de la demande:
**12.11.2003 Bulletin 2003/46**

(73) Titulaires:
- **Société de Technologie Michelin**
  **63000 Clermont-Ferrand Cedex 09 (FR)**
- **MICHELIN Recherche et Technique S.A.**
  **1763 Granges-Paccot (CH)**

(72) Inventeurs:
- **SIMONOT, Laure**
  **Greenville 29607, SC (US)**
- **CHARTIER, Thierry**
  **F-87220 Feytiat (FR)**
- **CUSTODERO, Emmanuel**
  **F-63400 Chamalieres (FR)**

(74) Mandataire: **Ribière, Joel**
**M.F.P. Michelin,**
**SGD/LG/PI - F35 - Ladoux**
**63040 Clermont-Ferrand Cedex 9 (FR)**

(56) Documents cités:
**EP-A- 0 940 428**
**WO-A-01/27192**
**WO-A-99/28376**
**DE-A- 19 539 218**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention est relative aux compositions de caoutchoucs diéniques utilisables pour la fabrication de pneumatiques ou de produits semi-finis pour pneumatiques, en particulier de bandes de roulement de ces pneumatiques, ainsi qu'aux charges renforçantes susceptibles de renforcer de telles compositions de caoutchouc.

De façon à réduire la consommation de carburant et les nuisances émises par les véhicules à moteur, des efforts importants ont été réalisés par les concepteurs de pneumatiques afin d'obtenir des pneumatiques présentant à la fois une très faible résistance au roulement, une adhérence améliorée tant sur sol sec que sur sol humide ou enneigé et une très bonne résistance à l'usure.

De nombreuses solutions ont ainsi été proposées pour abaisser la résistance au roulement et améliorer l'adhérence des pneumatiques, mais celles-ci se traduisent en général par une déchéance très importante de la résistance à l'usure. Il est bien connu notamment que l'incorporation de charges blanches conventionnelles comme par exemple des silices ou alumines conventionnelles, de la craie, du talc, des argiles telles que la bentonite ou le kaolin, dans des compositions de caoutchouc utilisées pour la fabrication de pneumatiques et notamment de bandes de roulement, se traduit certes par un abaissement de la résistance au roulement et par une amélioration de l'adhérence sur sol mouillé, enneigé ou verglacé, mais aussi par une déchéance inacceptable de la résistance à l'usure liée au fait que ces charges blanches conventionnelles n'ont pas de capacité de renforcement suffisante vis-à-vis de telles compositions de caoutchouc. On qualifie généralement ces charges blanches, pour cette raison, de charges non renforçantes encore appelées charges inertes.

Une solution efficace à ce problème a été décrite notamment dans les demandes de brevet EP-A-0501227, EP-A-0735088 ou WO99/02602 qui divulguent des compositions de caoutchouc diénique renforcées de silices précipitées à haute dispersibilité (silices dites "HDS" pour *"highly dispersible silica",* permettant de fabriquer des bandes de roulement ayant une résistance au roulement nettement améliorée, sans affecter les autres propriétés en particulier celles d'adhérence, d'endurance et surtout de résistance à l'usure. D'autres compositions présentant un tel compromis de propriétés contradictoires sont également décrites dans les demandes EP-A-0810258 et WO99/02602 avec à titre de charges blanches renforçantes, des charges alumineuses spécifiques à dispersibilité élevée.

Toutefois, la mise en oeuvre ("processabilité") des compositions de caoutchouc contenant ces charges blanches spécifiques, même lorsqu'elles sont du type hautement dispersibles, reste plus difficile que pour les compositions de caoutchouc chargées conventionnellement de noir de carbone. En effet, pour des raisons d'affinités réciproques, ces particules de charge blanche ont une fâcheuse tendance, dans la matrice élastomérique, à s'agglomérer entre-elles. Ces interactions tendent à augmenter la consistance à l'état cru des compositions et donc à rendre leur mise en oeuvre plus difficile qu'en présence de noir de carbone ; elles ont aussi pour conséquence de limiter la dispersion de la charge et donc les propriétés de renforcement à un niveau sensiblement inférieur à celui qu'il serait théoriquement possible d'atteindre si toutes les liaisons (charge blanche/élastomère) susceptibles d'être créées pendant les opérations de malaxage thermo-mécanique, étaient effectivement obtenues.

De surcroît, ces charges inorganiques du type siliceuses ou alumineuses présentent aussi l'inconvénient connu de perturber de manière sensible la cinétique de vulcanisation des compositions élastomériques, comparativement aux compositions conventionnelles chargées de noir de carbone. En particulier, dans le cas de silices, on sait que les durées de cuisson plus longues qui en résultent peuvent pénaliser la mise en oeuvre industrielle des compositions élastomériques, comme celle des articles en caoutchouc les contenant.

Or, les Demanderesses ont découvert lors de leurs recherches qu'il existe des charges inorganiques spécifiques, autres que celles précitées, qui elles aussi peuvent être utilisées dans les compositions de caoutchouc comme de véritables charges renforçantes, c'est-à-dire sont capables de remplacer des noirs de carbone conventionnels pour pneumatiques. De manière inattendue, ces charges inorganiques spécifiques offrent non seulement une excellente capacité de mise en oeuvre aux compositions de caoutchouc les contenant, mais encore une aptitude à la dispersion très élevée, toutes deux proches de celles disponibles avec des noirs de carbone. Elles permettent en outre de pallier l'inconvénient précité relatif aux cinétiques de cuisson, propre aux charges blanches renforçantes du type silices ou alumines.

En conséquence, un premier objet de l'invention concerne une composition de caoutchouc à base d'au moins (i) un élastomère diénique, (ii) une charge inorganique renforçante, (iii) un agent de couplage assurant la liaison entre la charge renforçante et l'élastomère, caractérisée en ce que ladite charge inorganique comprend un carbure de silicium (ci-après dénommé "carbure de silicium renforçant") ayant les caractéristiques suivantes:

- (a) une surface spécifique BET comprise entre 20 et 200 $m^2/g$;
- (b) une taille moyenne (en masse) de particules ($d_w$) comprise entre 10 et 350 nm.

Traditionnellement, on le sait, les carbures de silicium ont été utilisés essentiellement dans les bandes de roulement des pneumatiques pour améliorer l'adhérence sur sol neigeux ou verglacé (voir par exemple FR-A-655105,

FR-A-2218209, FR-A-2293325 ou DE-A-2457446, DE-A-2355466, DE-A-2457446, DE-A-3218124, EP-A-0442155, EP-A-0885925, JP-A-1985/258235, JP-A-1987/091304, JP-A-1988/151506, JP-A-1990/091137, JP-A-1990/135241, JP-A-1990/266704, JP-A-1991/252432 ou US-A-5162395, US-A-3878147, US-A-5223333, US-A-5733650). Dans tous ces documents, les particules de carbure de silicium, choisies pour leur taille grossière et leur dureté très élevée ont pour fonction, non pas le renforcement, mais l'amélioration de l'adhérence par un effet de "griffe" bien connu sur neige ou glace. D'ailleurs, il est essentiel de noter que ces carbures de silicium conventionnels, présents en général en proportion très faible, sont toujours ajoutés à des compositions de caoutchouc qui contiennent par ailleurs une véritable charge renforçante comme le noir de carbone et/ou la silice.

L'invention a également pour objet un procédé d'obtention d'une composition de caoutchouc utilisable pour la fabrication de pneumatiques, dans lequel on incorpore à au moins un élastomère diénique, au moins une charge inorganique renforçante et un agent de couplage assurant la liaison entre la charge inorganique renforçante et l'élastomère, ce procédé étant caractérisé en ce que ladite charge inorganique comporte un carbure de silicium ayant les caractéristiques suivantes:

- (a) une surface spécifique BET comprise entre 20 et 200 $m^2/g$;
- (b) une taille moyenne (en masse) de particules $d_w$ comprise entre 10 et 350 nm,

et en ce qu'on malaxe thermomécaniquement le tout, en une ou plusieurs étapes, jusqu'à atteindre une température maximale comprise entre 110°C et 190°C.

L'invention a également pour objet l'utilisation d'une composition de caoutchouc conforme à l'invention pour la fabrication d'articles en caoutchouc, en particulier de pneumatiques ou de produits semi-finis en caoutchouc destinés à ces pneumatiques, ces articles semi-finis étant notamment choisis dans le groupe constitué par les bandes de roulement, les sous-couches destinées par exemple à être placées sous ces bandes de roulement, les nappes sommet, les flancs, les nappes carcasse, les talons, les protecteurs, les chambres à air et les gommes intérieures étanches pour pneu sans chambre.

La composition conforme à l'invention est particulièrement adaptée à la fabrication de bandes de roulement de pneumatiques destinés à équiper des véhicules de tourisme, camionnettes, véhicules 4x4 (à 4 roues motrices), deux roues, "Poids-lourds" (c'est-à-dire métro, bus, engins de transport routier (camions, tracteurs, remorques), véhicules hors-la-route), avions, engins de génie civil, agraire, ou de manutention, ces bandes de roulement pouvant être utilisées lors de la fabrication de pneumatiques neufs ou pour le rechapage de pneumatiques usagés.

L'invention a également pour objet ces pneumatiques et ces produits semi-finis en caoutchouc eux-mêmes, notamment ces bandes de roulement, lorsqu'ils comportent une composition de caoutchouc conforme à l'invention.

L'invention a également pour objet l'utilisation à titre de charge renforçante, dans une composition de caoutchouc diénique, d'un carbure de silicium renforçant tel que défini ci-dessus.

L'invention a enfin pour objet un procédé pour renforcer une composition de caoutchouc diénique, caractérisé en ce qu'on incorpore à cette composition à l'état cru, par malaxage thermo-mécanique, un carbure de silicium renforçant tel que défini ci-dessus.

L'invention ainsi que ses avantages seront aisément compris à la lumière de la description et des exemples de réalisation qui suivent, ainsi que des figures 1 à 9 relatives à ces exemples qui représentent:

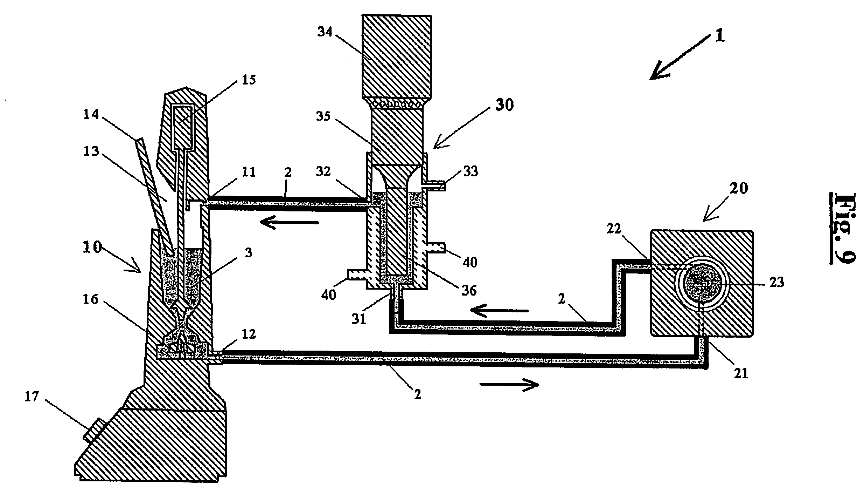

- des courbes d'évolution de la taille d'agglomérats au cours d'une sonification à l'aide du dispositif de la figure 9, pour des charges conformes ou non à l'invention, courbes à partir desquelles sont déterminées les vitesses de désagglomération $\alpha$ (fig. 1 à fig. 4);

- des courbes de variation de module en fonction de l'allongement pour différentes compositions de caoutchouc diénique, conformes ou non à l'invention (fig. 5 à fig. 8);

- un schéma de dispositif apte à mesurer la vitesse de désagglomération aux ultrasons ($\alpha$) d'une charge se présentant sous la forme d'agglomérats de particules (fig. 9).

## I. MESURES ET TESTS UTILISES

### I-1. Caractérisation des charges renforçantes

Les charges décrites ci-après consistent de manière connue en des agglomérats de particules, susceptibles de se désagglomérer en ces particules sous l'effet d'une force externe, par exemple sous l'action d'un travail mécanique ou d'ultrasons. Le terme "particule" utilisé dans la présente demande doit être compris dans son sens générique habituel d'agrégat (encore appelé "particule secondaire"), et non dans celui de particule élémentaire (encore appelé "particule

primaire") éventuelle pouvant former, le cas échéant, une partie de cet agrégat ; par "agrégat", il faut entendre de manière connue l'ensemble insécable (i.e., qui ne peut être coupé, divisé, partagé) qui est produit lors de la synthèse de la charge, en général formé de particules élémentaires (primaires) agrégées entre elles.

Ces charges sont caractérisées comme indiqué ci-après.

a) surface spécifique BET:

La surface spécifique ("aire massique") BET est déterminée par adsorption de gaz à l'aide de la méthode de Brunauer-Emmett-Teller décrite dans *"The Journal of the American Chemical Society"* Vol. 60, page 309, février 1938), plus précisément selon la norme française NF ISO 9277 de décembre 1996 [méthode volumétrique multipoints (5 points) - gaz: azote - dégazage: 1heure à 160°C - domaine de pression relative *p*/*po* : 0.05 à 0.17].

b) taille moyenne des particules $d_w$ :

La taille moyenne (en masse) des particules, notée $d_w$, est mesurée de manière classique après dispersion aux ultrasons de la charge à analyser dans une solution aqueuse d'hydroxyde de sodium à 0,01 mol/l (environ 0,4% en poids).

La mesure est réalisée au moyen d'un sédimentomètre centrifuge à détection optique type "DCP" ("Disc Centrifuge Photosedimentometer"), commercialisé par la société Brookhaven Instruments, dispositif connu utilisé notamment pour la caractérisation de particules de noir de carbone. L'appareil est équipé d'une source LED émettant dans la bande spectrale comprise entre 600 et 700 nm.

Le mode opératoire est le suivant. On réalise une suspension de 3 à 6 mg (par exemple, 5 mg conviennent dans la majorité des cas) d'échantillon de charge à analyser dans 40 ml de solution aqueuse contenant 0,01 mol/l de NaOH à titre de stabilisant de la suspension, par action durant 8 minutes, à 60% de puissance (60% de la position maxi du *"output control"),* d'une sonde ultrasons de 1500 W (sonificateur Vibracell 3/4 pouce commercialisé par la société Bioblock sous la référence M75450). Pour limiter l'échauffement pendant la sonification, la suspension est placée de préférence dans un bain d'eau froide (par exemple à une température de 5 à 10°C). Après sonification, on introduit 15 ml de la suspension dans le disque en rotation ; après sédimentation pendant 120 minutes, la distribution en masse des tailles de particules et la taille moyenne en masse des particules $d_w$ sont calculées de manière connue par le logiciel du sédimentomètre "DCP" ($d_w = \Sigma(n_i\ d_i^5) / \Sigma(n_i\ d_i^4)$ avec $n_i$ nombre d'objets de la classe de taille ou diamètre $d_i$) en appliquant une correction optique spécifique tenant compte de l'indice de réfraction complexe de la charge analysée (par exemple n* = 2,61 + 1,00.i pour le carbure de silicium), de l'indice de réfraction du milieu de suspension et des caractéristiques spectrales du couple source/détecteur fournies par la société Brookhaven Instruments. L'indice de réfraction du milieu de suspension en fonction de la longueur d'onde de la source LED est obtenu de manière connue, par interpolation linéaire entre les valeurs d'indices de réfraction de l'eau à 20°C : 1,3322 à 620 nm et 1,3305 à 690 nm. Cette correction optique est générée au moyen du programme DCP_SCAT.exc de Brookhaven Instruments.

c) vitesse de désagglomération $\alpha$:

La vitesse de désagglomération (notée $\alpha$) est mesurée au test dit "test de désagglomération aux ultrasons", à 20% de puissance d'une sonde de 600 W (watts). Ce test de principe connu permet de mesurer en continu l'évolution de la taille moyenne (en volume) des agglomérats de particules durant une sonification (voir WO99/28376, WO99/28380, WO99/28391). Etant donné la très faible taille des objets observés, le mode opératoire a été adapté en recourant non plus à la méthode de Frauenhofer mais dans le cas présent à celle de Mie.

Le montage utilisé est constitué d'un granulomètre laser (type "Mastersizer S", commercialisé par Malvern Instruments - source laser He-Ne émettant dans le rouge, longueur d'onde 632,8 nm) et de son préparateur ("Malvern Small Sample Unit MSX1"), entre lesquels a été intercalée une cellule de traitement en flux continu (Bioblock M72410) munie d'une sonde ultrasons (Sonificateur 1/2 pouce type Vibracell de 600 W commercialisé par la société Bioblock sous la référence M72412).

Une faible quantité (20 mg) de charge à analyser est introduite dans le préparateur avec 160 ml d'une solution aqueuse de $NH_4OH$, la vitesse de circulation étant fixée à son maximum (environ 3 litres par minute). La solution de $NH_4OH$ est préparée avec 5 ou 10 ml de $NH_4OH$ à 25% en masse de $NH_3$ (par exemple produit de la société Fluka sous référence 09860) dilués dans 1000 ml d'eau, selon la surface BET de la charge (5 ml pour des valeurs de BET au plus égales à 100 $m^2/g$, 10 ml conviennent pour toute surface BET).

Au moins trois mesures consécutives sont réalisées pour déterminer, selon la méthode de calcul connue de Mie [matrice de calcul Malvern 3TJD, établie avec un indice de réfraction complexe (par exemple n*=2,61+1,00.i pour le carbure de silicium)], le diamètre initial moyen (en volume) des agglomérats, noté $d_v[0]$. La sonification est ensuite établie à une puissance de 20% (soit 20% de la position maxi du "tip amplitude") et on suit durant 9 minutes environ

l'évolution du diamètre moyen en volume $d_v[t]$ en fonction du temps "t" à raison d'une mesure toutes les 10 secondes environ. Après une période d'induction (environ 3 min), il est observé que l'inverse du diamètre moyen en volume $1/d_v[t]$ varie linéairement, ou de manière sensiblement linéaire, avec le temps "t" (régime stable de désagglomération). La vitesse de désagglomération $\alpha$ est calculée par régression linéaire de la courbe d'évolution de $1/d_v[t]$ en fonction du temps "t", dans la zone de régime stable de désagglomération (en général, entre 3 et 9 minutes environ). Elle est exprimée en $\mu m^{-1}/s$.

La figure 9 schématise un dispositif de mesure utilisable pour la réalisation de ce test de désagglomération aux ultrasons. Ce dispositif consiste en un circuit fermé 1 dans lequel peut circuler un flux 2 d'agglomérats de particules en suspension dans un liquide 3. Ce dispositif comporte essentiellement un préparateur d'échantillon 10, un granulomètre laser 20 et une cellule de traitement 30. Une mise à la pression atmosphérique (13, 33), au niveau du préparateur d'échantillon 10 et de la cellule de traitement 30 elle-même, permet l'élimination en continu des bulles d'air qui se forment durant la sonification (i.e., l'action de la sonde ultrasons).

Le préparateur d'échantillon 10 ("Malvern Small Sample Unit MSX1") est destiné à recevoir l'échantillon de charge à tester (en suspension dans le liquide 3) et à le faire circuler à travers le circuit 1 à la vitesse préréglée (potentiomètre 17), sous la forme d'un flux 2 de suspension liquide. Ce préparateur 10 consiste simplement en une cuve de réception qui contient, et à travers laquelle circule, la suspension à analyser. Il est équipé d'un moteur d'agitation 15, à vitesse modulable, afin d'éviter une sédimentation des agglomérats de particules de la suspension; une mini-pompe centrifuge 16 est destinée à assurer la circulation de la suspension 2 dans le circuit 1 ; l'entrée 11 du préparateur 10 est reliée à l'air libre via une ouverture 13 destinée à recevoir l'échantillon de charge à tester et/ou le liquide 3 utilisé pour la suspension.

Au préparateur 10 est connecté un granulomètre laser 20 ("Mastersizer S") dont la fonction est de mesurer en continu, à intervalles de temps réguliers, la taille moyenne en volume "$d_v$" des agglomérats, au passage du flux 2, grâce à une cellule de mesure 23 à laquelle sont couplés les moyens d'enregistrement et de calcul automatiques du granulomètre 20. On rappelle ici brièvement que les granulomètres laser exploitent, de manière connue, le principe de la diffraction de la lumière par des objets solides mis en suspension dans un milieu dont l'indice de réfraction est différent de celui du solide. Pratiquement, il suffit de mesurer la quantité de lumière diffractée pour différents angles de diffraction pour pouvoir déterminer de manière connue, soit par la théorie de Frauenhofer, soit par la théorie de Mie, en fonction de la taille des objets observés, la distribution de taille (en volume) de l'échantillon, $d_v$ correspondant à la taille moyenne en volume de cette distribution ($d_v = \Sigma(n_i\ di^4) / \Sigma(n_i\ d_i^3)$ avec $n_i$ nombre d'objets de la classe de taille ou diamètre $d_i$).

Intercalée entre le préparateur 10 et le granulomètre laser 20 se trouve enfin une cellule de traitement 30 équipée d'une sonde ultrasons 35 (convertisseur 34 et tête de sonde 36) destinée à casser en continu les agglomérats de particules au passage du flux 2.

La cellule de traitement 30 est disposée entre la sortie 22 du granulomètre 20 et l'entrée 11 du préparateur 10, de telle manière que, en fonctionnement, le flux 2 de particules sortant du préparateur 10 traverse d'abord le granulomètre laser 20 avant d'entrer dans la cellule de traitement 30. Cette disposition a deux avantages majeurs pour les mesures : d'une part, les bulles d'air dues à l'action de la sonde ultrasons sont éliminées à la traversée du préparateur 10 (qui est à l'air libre), c'est-à-dire avant l'entrée dans le granulomètre 20, et elles ne perturbent donc pas la mesure de diffraction laser ; d'autre part, l'homogénéité de la suspension est améliorée par un passage préalable dans le préparateur 10.

La cellule de traitement 30 est en outre agencée de telle manière que le flux 2 de particules qui y pénètre, par une entrée 31, passe d'abord devant la tête 36 de la sonde ultrasons 35 ; cette disposition non conventionnelle (le flux 2 entre par le bas 31 de la cellule, et non par le haut 32) présente les avantages suivants: d'une part, toute la suspension circulante 2 est forcée de passer devant l'extrémité 36 de la sonde ultrasons 35, zone la plus active en termes de désagglomération ; d'autre part, cette disposition permet un premier dégazage après sonification dans le corps de la cellule de traitement 30 elle-même, la surface de la suspension 2 étant alors en contact avec l'atmosphère au moyen d'un tuyau 33 de faible diamètre.

Le flux 2 est de préférence thermostaté par l'intermédiaire d'un circuit de refroidissement 40 disposé, au niveau de la cellule 30, dans une double enveloppe entourant la sonde 35, la température étant contrôlée par exemple par une sonde de température 14 plongeant dans le liquide 3 au niveau du préparateur 10. La disposition des différents éléments du dispositif de mesure est optimisée de façon à limiter autant que possible le volume circulant, c'est-à-dire la longueur des tuyaux de raccordement (par exemple des tuyaux souples).

1-2. Caractérisation des compositions de caoutchouc

Les compositions de caoutchouc sont caractérisées, avant et après cuisson, comme indiqué ci-après.

a) plasticité Mooney:

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre).

b) essais de traction:

Ces essais permettent de déterminer les contraintes d'élasticité et les propriétés à la rupture. Sauf indication différente, ils sont effectués conformément à la norme française NF T 46-002 de septembre 1988. On mesure soit en première élongation (i.e., sans cycle d'accommodation- les modules sont alors notés "M") soit en troisième élongation (i.e., après deux cycles d'accommodation - les modules sont alors notés "E") les modules sécants vrais (i.e., calculés en se ramenant à la section réelle de l'éprouvette), exprimés en MPa, à 10% d'allongement (modules notés donc, respectivement, M10 et E10), 100% d'allongement (modules notés respectivement M100 et E100) et 300% d'allongement (modules notés respectivement M300 et E300).

On mesure également les contraintes à la rupture (en MPa) et les allongements à la rupture (en %). Toutes ces mesures de traction sont effectuées dans les conditions normales de température (23 $\pm$ 2°C) et d'hygrométrie (50 $\pm$ 5% d'humidité relative), selon la norme française NF T 40-101 (décembre 1979).

Un traitement des enregistrements de traction permet également de tracer la courbe de module en fonction de l'allongement (voir figures 5-8 annexées), le module utilisé ici étant le module sécant vrai mesuré en première élongation (module "M").

c) propriétés dynamiques:

Les propriétés dynamiques $\Delta G^*$ et $\tan(\delta)_{max}$ sont mesurées sur un viscoanalyseur (Metravib VA4000), selon la norme ASTM D 5992 - 96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à la fréquence de 10Hz, dans les conditions normales de température (23°C) selon la norme ASTM D 1349 - 99. On effectue un balayage en amplitude de déformation de 0,1 à 50% (cycle aller), puis de 50% à 1% (cycle retour). Les résultats exploités sont le module complexe de cisaillement dynamique (G*) et le facteur de perte (tan $\delta$). Pour le cycle retour, on indique la valeur maximale de tan $\delta$ observée (tan($\delta$)max), ainsi que l'écart de module complexe ($\Delta G^*$) entre les valeurs à 0.15 et 50% de déformation (effet Payne).

d) test de "bound rubber":

Le test dit de "bound rubber" permet de déterminer la proportion d'élastomère, dans une composition non vulcanisée, qui est associée à la charge renforçante si intimement que cette proportion d'élastomère est insoluble dans les solvants organiques usuels. La connaissance de cette proportion insoluble de caoutchouc, liée à la charge renforçante au cours du mélangeage, donne une indication quantitative de l'activité renforçante de la charge dans la composition de caoutchouc. Une telle méthode a été décrite par exemple dans la norme française NF T 45-114 (juin 1989) appliquée à la détermination du taux d'élastomère lié au noir de carbone.

Ce test, bien connu de l'homme du métier pour caractériser la qualité de renforcement apportée par la charge renforçante, a par exemple été décrit dans les documents suivants: *Plastics, Rubber and Composites Processing and Applications,* Vol. 25, No7, p. 327 (1996) ; *Rubber Chemistry and Technology,* Vol. 69, p. 325 (1996).

Dans le cas présent, on mesure le taux d'élastomère non extractible au toluène, après un gonflement pendant 15 jours d'un échantillon de composition de caoutchouc (typiquement 300-350 mg) dans ce solvant (par exemple dans 80-100 $cm^3$ de toluène), suivi d'une étape de séchage de 24 heures à 100°C, sous vide, avant pesée de l'échantillon de composition de caoutchouc ainsi traité. De préférence, l'étape de gonflement ci-dessus est conduite à la température ambiante (environ 20°C) et à l'abri de la lumière, et le solvant (toluène) est changé une fois, par exemple après les cinq premiers jours de gonflement. Le taux de "bound rubber" (% en poids) est calculé de manière connue par différence entre le poids initial et le poids final de l'échantillon de composition de caoutchouc, après prise en compte et élimination, dans le calcul, de la fraction des composants insolubles par nature, autres que l'élastomère, présents initialement dans la composition de caoutchouc.

e) rhéométrie:

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983) : les couples minimum et maximum, mesurés en déciNewton.mètre (dN.m), sont respectivement nommés $C_{min}$ et $C_{max}$; $t_i$ est le délai d'induction, c'est-à-dire le temps nécessaire au début de la réaction de vulcanisation ; $t_\alpha$, (par exemple $t_{99}$) est le temps nécessaire pour atteindre une conversion de α%, c'est-à-dire α% (par exemple 99%) de l'écart entre les couples minimum et maximum. On mesure également l'écart, noté ΔCouple (en dN.m), entre les couples minimum et maximum ainsi que la constante de vitesse de conversion K (en $min^{-1}$) d'ordre 1, calculée entre 30% et 80% de conversion, qui permet d'apprécier la cinétique de vulcanisation.

**II. CONDITIONS DE REALISATION DE L'INVENTION**

Les compositions de caoutchouc selon l'invention sont à base des constituants suivants : (i) (au moins) un élastomère diénique, (ii) (au moins) une charge inorganique renforçante et (iii) (au moins) un agent de couplage assurant la liaison entre cette charge et cet élastomère diénique, ladite charge inorganique comprenant un carbure de silicium renforçant tel que décrit en détail ci-après.

Bien entendu, par l'expression "composition à base de", il faut entendre une composition comportant le mélange et/ou le produit de réaction *in situ* des différents constituants de base utilisés, certains de ces constituants pouvant réagir et/ou étant destinés à réagir entre eux, au moins partiellement, lors des différentes phases de fabrication de la composition, ou lors de sa cuisson ultérieure.

II-1. Elastomère diénique

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De manière générale, on entend ici par élastomère diénique "essentiellement insaturé" un élastomère diénique issu au moins en partie de monomères diènes conjugués, ayant un taux de motifs ou unités d'origine diénique.(diènes conjugués) qui est supérieur à 15% (% en moles).

C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%).

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend en particulier par élastomère diénique susceptible d'être utilisé dans les compositions conformes à l'invention:

(a) - tout homopolymère obtenu par polymérisation d'un monomère diène conjugué ayant de 4 à 12 atomes de carbone;

(b) - tout copolymère obtenu par copolymérisation d'un ou plusieurs diènes conjugués entre eux ou avec un ou plusieurs composés vinyle aromatique ayant de 8 à 20 atomes de carbone;

(c) - tout copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;

(d) - tout copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention, en particulier lorsque la composition de caoutchouc est destinée à une bande de roulement de pneumatique, est en premier lieu mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di (alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et de 1% à 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés et être préparés en dispersion ou en solution ; ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse ("Tg" - mesurée selon norme ASTM D3418-82) entre -40°C et -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

Selon un mode préférentiel de réalisation de l'invention, l'élastomère diénique de la composition conforme à l'invention est choisi dans le groupe des élastomères diéniques fortement insaturés constitué par les polybutadiènes (BR), les polyisoprènes de synthèse (IR), le caoutchouc naturel (NR), les copolymères de butadiène-styrène (SBR), les copolymères de butadiène-isoprène (BIR), les copolymères de butadiène-acrylonitrile (NBR), les copolymères d'isoprène-styrène (SIR), les copolymères de butadiène-styrène-isoprène (SBIR), et les mélanges de ces élastomères.

La composition conforme à l'invention est notamment destinée à une bande de roulement pour pneumatique, qu'il s'agisse d'un pneumatique neuf ou usagé (cas d'un rechapage).

Lorsque une telle bande de roulement est destinée par exemple à un pneumatique tourisme, l'élastomère diénique est de préférence un SBR ou un coupage (mélange) SBR/BR, SBR/NR (ou SBR/IR), ou encore BR/NR (ou BR/IR). Dans le cas d'un élastomère SBR, on utilise notamment un SBR ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre -20°C et -55°C, ce copolymère SBR, de préférence préparé en solution (SSBR), étant éventuellement utilisé en mélange avec un polybutadiène (BR) possédant de préférence plus de 90% de liaisons cis-1,4.

Lorsque la bande de roulement est destinée à un pneumatique utilitaire tel que Poids-lourd, l'élastomère diénique est de préférence un élastomère isoprénique. On entend par "élastomère isoprénique", de manière connue, un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Bien entendu, l'élastomère diénique peut être aussi constitué, en partie, d'un autre élastomère fortement insaturé tel que, par exemple, un élastomère SBR.

Selon un autre mode de réalisation avantageux de l'invention, notamment lorsqu'elle est destinée à un flanc de pneumatique, la composition conforme à l'invention peut contenir au moins un élastomère diénique essentiellement saturé, en particulier au moins un copolymère EPDM, que ce copolymère soit par exemple utilisé ou non en mélange avec un ou plusieurs des élastomères diéniques fortement insaturés cités précédemment.

Les compositions de l'invention peuvent contenir un seul élastomère diénique ou un mélange de plusieurs élastomères diéniques, le ou les élastomères diéniques pouvant être utilisés en association avec tout type d'élastomère

synthétique autre que diénique, voire avec des polymères autres que des élastomères, par exemple des polymères thermoplastiques.

II-2. Charge renforçante

Le carbure de silicium utilisé à titre de charge inorganique renforçante peut constituer la totalité ou une partie seulement de la charge renforçante totale, dans ce dernier cas associé par exemple à une autre charge inorganique renforçante telle que de la silice, ou à du noir de carbone conventionnel.
De préférence, il constitue la majorité, c'est-à-dire plus de 50% de la charge renforçante totale (i.e., de la charge renforçante inorganique totale en l'absence de noir de carbone), ce pourcentage étant exprimé ici en volume et non pas en poids, pour tenir compte de la différence importante de densité entre un carbure de silicium et une charge usuelle du type noir de carbone ou silice; Avantageusement, la carbure de silicium renforçant peut constituer la totalité de la charge (inorganique) renforçante.
Dans la présente demande, on entend de manière générale par charge "renforçante" une charge capable de renforcer à elle seule, sans autre moyen qu'un agent de couplage intermédiaire, une composition de caoutchouc destinée à la fabrication de pneumatiques ; en d'autres termes, une charge inorganique qualifiée de renforçante est capable de remplacer, dans sa fonction de renforcement, une charge conventionnelle de noir de carbone de grade pneumatique.
La composition conforme à l'invention utilise donc, à titre de charge renforçante, un carbure de silicium ayant les caractéristiques suivantes : (a) une surface spécifique BET qui est comprise entre 20 et 200 $m^2/g$ ; (b) une taille moyenne (en masse) de particules, notée $d_w$, qui est comprise entre 10 et 350 nm.
Par carbure de silicium, on entend tout composé répondant, aux impuretés près, à la formule connue SiC, quelle que soit sa forme, cristalline ou amorphe.
Pour une surface BET inférieure à 20 $m^2/g$, les compositions présentent certes une mise en oeuvre facilitée et une hystérèse réduite, mais on observe une déchéance des propriétés à la rupture et une résistance à l'usure, en pneumatique, qui diminue ; pour des surfaces BET supérieures à 200 $m^2/g$, la mise en oeuvre à l'état cru devient plus difficile (plasticité Mooney plus élevée) et la dispersion de la charge s'en trouve dégradée. Pour des tailles $d_w$ trop élevées, supérieures à 350 nm, les particules se comportent comme des défauts qui localisent les contraintes et sont préjudiciables à l'usure ; des tailles $d_w$ trop petites, inférieures à 10 nm, vont par contre pénaliser la mise en oeuvre à l'état cru et la dispersion de la charge au cours de cette mise en oeuvre.
Pour toutes les raisons exposées ci-avant, la surface BET est de préférence comprise entre 20 et 150 $m^2/g$ et la taille de particules $d_w$ est de préférence comprise dans un domaine allant de 20 à 300 nm.
La dispersibilité intrinsèque d'une charge peut être évaluée à l'aide du test de désagglomération aux ultrasons connu décrit au chapitre I précédent, par mesure de la vitesse de désagglomération $\alpha$ de cette charge. Préférentiellement, le carbure de silicium renforçant précédemment décrit présente une vitesse $\alpha$ qui est supérieure à $1.10^{-4}$ $\mu m^{-1}/s$, mesurée au test de désagglomération à 20% de puissance d'une sonde ultrasons de 600 W. Une telle caractéristique préférentielle garantit pour ce type de produit une très bonne aptitude, d'une part à s'incorporer dans la matrice lors du mélangeage avec l'élastomère, d'autre part à se désagglomérer afin de se disperser, sous une forme finement divisée, de façon homogène dans la matrice caoutchouteuse. Pour une telle vitesse $\alpha$ supérieure à $1.10^{-4}$ $\mu m^{-1}/s$, on a constaté que peu d'agglomérats microniques sont observés par réflexion en microscopie optique sur une coupe de composition caoutchouteuse préparée selon les règles de l'art.
De manière plus préférentielle, notamment lorsque les compositions de l'invention sont destinées à des bandes de roulement de pneumatiques présentant une faible résistance au roulement et une résistance élevée à l'usure, les carbures de silicium renforçants utilisés vérifient au moins l'une des caractéristiques suivantes, de préférence les deux :

- une surface BET comprise dans un domaine de 25 à 140 $m^2/g$;
- une taille de particules $d_w$ comprise dans un domaine de 20 à 250 nm.

Par ailleurs, pour une dispersibilité encore meilleure du carbure de silicium renforçant dans la matrice de caoutchouc diénique, et donc pour un renforcement optimal, on préfère que sa vitesse de désagglomération $\alpha$ soit supérieure à $5.10^{-4}$ $\mu m^{-1}/s$, plus préférentiellement encore supérieure à $1.10^{-3}$ $\mu m^{-1}/s$.
Les particules de carbure de silicium renforçant présentent en outre une bonne réactivité de surface, c'est-à-dire un taux élevé de fonctions hydroxyle de surface (-OH) réactives vis-à-vis de l'agent de couplage, ce qui est particulièrement favorable à la fonction de renforcement remplie par la charge, et donc aux propriétés mécaniques des compositions de caoutchouc de l'invention.
L'état physique sous lequel peut se présenter le carbure de silicium renforçant est indifférent, que ce soit sous forme de poudre, de microperles, de granulés, de pellets, de billes ou toute autre forme densifiée, à la condition bien évidemment que le mode de densification n'altère pas les caractéristiques essentielles ou préférentielles préconisées pour cette charge.

Le carbure de silicium renforçant décrit ci-dessus peut être utilisé seul ou associé à une autre charge inorganique renforçante, voire plusieurs, par exemple à une silice ou une alumine. On rappelle ici que, par opposition au noir de carbone conventionnel, doit être entendu par charge "blanche" (parfois appelée aussi charge "claire") toute charge inorganique ou minérale, quelles que soient sa couleur et son origine (naturelle ou de synthèse).

Dans le cas d'une silice, on utilise de préférence une silice précipitée hautement dispersible, en particulier lorsque l'invention est mise en oeuvre pour la fabrication de pneumatiques présentant une faible résistance au roulement ; comme exemples non limitatifs de telles silices hautement dispersibles préférentielles, on peut citer les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, des silices précipitées traitées telles que par exemple les silices "dopées" à l'aluminium décrites dans la demande EP-A-0735088 précitée. Si une alumine renforçante est utilisée, il s'agit préférentiellement d'une alumine hautement dispersible telle que décrite dans la demande EP-A-0810258 précitée, par exemple des alumines "Baikalox" "A125" ou "CR125" (société Baïkowski), "APA-100RDX" (société Condea), "Aluminoxid C" (société Degussa) ou "AKP-GO15" (Sumitomo Chemicals).

Le carbure de silicium renforçant, seul ou éventuellement associé à une autre charge inorganique renforçante, peut également être utilisé en coupage, i.e., en mélange, avec un ou plusieurs noirs de carbone conventionnels de grade pneumatique. Comme noirs de carbone conviennent tous les noirs de carbone, notamment les noirs du type HAF, ISAF, SAF, conventionnellement utilisés dans les pneumatiques et particulièrement dans les bandes de roulement des pneumatiques. A titre d'exemples non limitatifs de tels noirs, on peut citer les noirs N115, N134, N234, N330, N339, N347, N375.

La quantité de noir de carbone présente dans la charge renforçante totale peut varier dans de larges limites, cette quantité étant toutefois préférentiellement inférieure à la quantité de carbure de silicium présente dans la composition de caoutchouc.

Dans les compositions conformes à l'invention, on utilise avantageusement, en association avec le carbure de silicium renforçant, un noir de carbone en faible proportion, à un taux préférentiel compris entre 2 et 20 pce, plus préférentiellement compris dans un domaine de 5 à 15 pce (parties en poids pour cent parties d'élastomère). Dans les intervalles indiqués, on bénéficie des propriétés colorantes (agent de pigmentation noire) et anti-UV des noirs de carbone, sans pénaliser par ailleurs les performances typiques apportées par le carbure de silicium renforçant.

De manière préférentielle, le taux de charge renforçante totale dans les compositions de l'invention est compris dans un domaine allant de 20 à 400 pce, plus préférentiellement de 30 à 200 pce en ce qui concerne aussi le taux de charge inorganique. L'optimum est en effet différent selon les applications visées : de manière connue, le niveau de renforcement attendu sur un pneumatique vélo, par exemple, est nettement inférieur à celui exigé sur un pneumatique pour véhicule de tourisme ou pour véhicule utilitaire tel que Poids-lourd. Lorsque les compositions de l'invention sont destinées à des bandes de roulement de pneumatiques, le taux de charge inorganique renforçante, donc de carbure de silicium renforçant lorsque ce dernier constitue la totalité de cette charge inorganique renforçante, est choisi de préférence supérieur à 50 pce, par exemple compris entre 50 et 150 pce, plus préférentiellement encore supérieur à 60 pce.

A titre d'exemples de carbures de silicium renforçants susceptibles de convenir aux compositions de caoutchouc de l'invention, on citera notamment des carbures de silicium obtenus de manière connue par une technique de pyrolyse laser (voir par exemple FR-A-2677558) ; leur synthèse a été décrite en détail, notamment dans les publications suivantes: *"Laser synthesis of silicon carbide powders from silane and hydrocarbon mixtures"*, M. Cauchetier, O. Croix et M. Luce, *Adv. Ceram. Mater.,* 3(6), 548-552 (1988) ; ou *"Evolution of the structure of ultrafine silicon carbide laser formed powders with synthesis conditions"*, P. Tougne, H. Hommel, A. Legrand, N. Herlin, M. Luce et M. Cauchetier, *Diam. Relat. Mater.,* 2(2-4), 486-490 (1993).

Un autre exemple de carbure de silicium renforçant utilisable dans les compositions conformes à l'invention est le carbure de silicium commercialisé par la société MarkeTech International Inc. (USA, Port Townsend - WA) sous la référence "NP-S0140".

<u>II-3. Agent de couplage</u>

Il est bien connu de l'homme du métier qu'il est nécessaire d'utiliser, pour une charge inorganique renforçante telle que par exemple une silice ou une alumine renforçante, un agent de couplage (charge blanche/élastomère), encore appelé agent de liaison, qui a pour fonction d'assurer la liaison ou "couplage" entre la charge blanche et l'élastomère, tout en facilitant la dispersion de cette charge inorganique au sein de la matrice élastomérique.

Le carbure de silicium renforçant décrit précédemment nécessite lui aussi l'emploi d'un tel agent de couplage pour assurer sa fonction de charge renforçante dans les compositions de caoutchouc conformes à l'invention.

Par agent de couplage, on entend plus précisément un agent apte à établir une connexion suffisante, de nature chimique et/ou physique, entre la charge considérée et l'élastomère ; un tel agent de couplage, au moins bifonctionnel, a par exemple comme formule générale simplifiée " Y-T-X ", dans laquelle:

- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère, par exemple par l'intermédiaire d'un atome de soufre;
- T représente un groupe permettant de relier Y et X.

Les agents de couplage ne doivent en particulier pas être confondus avec de simples agents de recouvrement de la charge considérée qui, de manière connue, peuvent comporter la fonction Y active vis-à-vis de la charge mais sont dépourvus de la fonction X active vis-à-vis de l'élastomère.

De tels agents de couplage, d'efficacité variable, ont été décrits dans un très grand nombre de documents et sont bien connus de l'homme du métier. On peut utiliser en fait tout agent de couplage connu pour, ou susceptible d'assurer efficacement, dans les compositions de caoutchouc diénique utilisables pour la fabrication de pneumatiques, la liaison ou couplage entre une charge blanche renforçante telle que de la silice et un élastomère diénique, comme par exemple des organosilanes, notamment des alkoxysilanes polysulfurés ou des mercaptosilanes, ou encore des polyorganosiloxanes porteurs des fonctions X et Y précitées.

Des agents de couplage silice/élastomère, notamment, ont été décrits dans un grand nombre de documents, les plus connus étant des alkoxysilanes bifonctionnels tels que des alkoxysilanes polysulfurés.

On utilise en particulier des alkoxysilanes polysulfurés, dits "symétriques" ou "asymétriques" selon leur structure particulière, tels que décrits par exemple dans les brevets US-A-3 842 111, US-A-3 873 489, US-A-3 978 103, US-A-3 997 581, US-A-4 002 594, US-A-4 072 701, US-A-4 129 585, ou dans les brevets plus récents US-A-5 580 919, US-A-5 583 245, US-A-5 650 457, US-A-5 663 358, US-A-5 663 395, US-A-5 663 396, US-A-5 674 932, US-A-5 675 014, US-A-5 684 171, US-A-5 684 172, US-A-5 696 197, US-A-5 708 053, US-A-5 892 085, EP-A-1 043 357 qui énoncent en détail de tels composés connus.

Conviennent en particulier pour la mise en oeuvre de l'invention, sans que la définition ci-après soit limitative, des alkoxysilanes polysulfurés symétriques répondant à la formule générale (I) suivante:

(I) $Z\text{-}A\text{-}S_n\text{-}A\text{-}Z$,

dans laquelle:

- n est un entier de 2 à 8 (de préférence de 2 à 5);
- A est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$ en particulier le propylène);
- Z répond à l'une des formules ci-après:

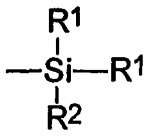 ; 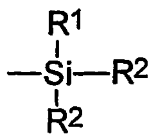 ; 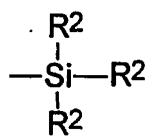 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence des groupes alkoxyle en $C_1$-$C_8$ ou cycloalkoxyle en $C_5$-$C_8$, plus préférentiellement des groupes alkoxyle en $C_1$-$C_4$, en particulier le méthoxyle et/ou l'éthoxyle).

Dans le cas d'un mélange d'alkoxysilanes polysulfurés répondant à la formule (I) ci-dessus, notamment des mélanges usuels disponibles commercialement, la valeur moyenne des "n" est un nombre fractionnaire de préférence compris entre 2 et 5 , plus préférentiellement proche de 4. Mais l'invention peut être aussi avantageusement mise en oeuvre par exemple avec des alkoxysilanes disulfurés (n = 2).

Comme alkoxysilanes polysulfurés, on citera plus particulièrement les polysulfures (notamment les disulfurés, trisulfures ou tétrasulfures) de bis-(alkoxyl($C_1$-$C_4$)-ékyl($C_1$-$C_4$)silylalkyl($C_1$-$C_4$)), comme par exemple les polysulfures de bis(3-triméthoxysilylpropyl) ou de bis(3-triéthoxysilylpropyl). Parmi ces composés, on utilise notamment le tétrasulfure de bis(3-triéthoxysilylpropyl), en abrégé TESPT, de formule $[(C_2H_5O)_3Si(CH_2)_3S_2]_2$ ou le disulfure de bis(triéthoxysilylpropyle), en abrégé TESPD, de formule $[(C_2H_5O)_3Si(CH_2)_3S]_2$. Le TESPD est commercialisé par exemple par la société Degussa sous les dénominations Si266 ou Si75 (dans le second cas, sous forme d'un mélange de disulfure (à 75% en poids) et de polysulfures), ou encore par la société Witco sous la dénomination Silquest A1589. Le TESPT est commercialisé par exemple par la société Degussa sous la dénomination Si69 (ou X50S lorsqu'il est supporté à 50% en poids sur du noir de carbone), ou encore par la société Osi Specialties sous la dénomination Silquest A1289 (dans les deux cas, mélange commercial de polysulfures avec une valeur moyenne pour n qui est proche de 4).

A titre d'exemples d'agents de couplage autres que les alkoxysilanes polysulfurés précités, on citera notamment des polyorganosiloxanes bifonctionnels tels que décrits par exemple dans la demande WO99/02602 précitée.

L'homme du métier saura ajuster la teneur en agent de couplage dans les compositions de l'invention, en fonction de l'application visée, de la nature de l'élastomère utilisé et de la quantité de carbure de silicium renforçant, complété le cas échéant de toute autre charge inorganique employée à titre de charge renforçante complémentaire.

De manière à tenir compte des différences de surface spécifique et de densité des carbures de silicium (et, le cas échéant, d'éventuelles autres charges inorganiques renforçantes associées) susceptibles d'être utilisés, ainsi que des masses molaires des agents de couplage, il est préférable de déterminer le taux optimal d'agent de couplage en moles par mètre carré de charge inorganique renforçante, pour chaque charge inorganique renforçante (carbure de silicium plus, le cas échéant, charge inorganique complémentaire associée) utilisée ; ce taux optimal est calculé à partir du rapport pondéral [agent de couplage/charge inorganique renforçante], de la surface BET de la charge et de la masse molaire de l'agent de couplage (notée M ci-après), selon la relation connue suivante:

$$\text{(moles/m}^2\text{ charge inorganique)} = \text{[agent de couplage/charge inorganique]}\ (1/\text{BET})\ (1/M)$$

Préférentiellement, la quantité d'agent de couplage utilisée dans les compositions conformes à l'invention est comprise entre $10^{-7}$ et $10^{-5}$ moles par $m^2$ de charge inorganique renforçante, soit par $m^2$ de carbure de silicium renforçant lorsque ce dernier est utilisé sans charge inorganique renforçante associée. Plus préférentiellement encore, la quantité d'agent de couplage est comprise entre $5.10^{-7}$ et $5.10^{-6}$ moles par mètre carré de charge inorganique totale (carbure de silicium plus, le cas échéant, charge inorganique complémentaire associée).

Compte tenu des quantités exprimées ci-dessus, de manière générale, le taux d'agent de couplage, ramené au poids d'élastomère diénique, sera de préférence compris entre 0,1 et 25 pce, plus préférentiellement compris entre 0,5 et 20 pce.

L'agent de couplage utilisé pourrait être préalablement greffé (via la fonction "X") sur l'élastomère diénique de la composition de l'invention, l'élastomère ainsi fonctionnalisé ou "précouplé" comportant alors la fonction "Y" libre pour le carbure de silicium renforçant. L'agent de couplage pourrait également être préalablement greffé (via la fonction "Y") sur le carbure de silicium renforçant, la charge ainsi "précouplée" pouvant ensuite être liée à l'élastomère diénique par l'intermédiaire des fonctions libres "X". On préfère toutefois utiliser l'agent de couplage à l'état libre (i.e., non greffé) ou greffé sur le carbure de silicium renforçant, notamment pour des raisons de meilleure mise en oeuvre des compositions à l'état cru.

Enfin, à l'agent de couplage peut être éventuellement associé un "activateur de couplage" approprié, soit un corps (i.e., un composé unique ou une association de composés) qui, mélangé avec cet agent de couplage, augmente l'efficacité de ce dernier. Des activateurs de couplage d'alkoxysilanes polysulfurés ont par exemple été décrits dans les demandes WO00/5300 et WO00/5301, consistant en l'association d'une guanidine substituée, en particulier la N,N'-diphénylguanidine (en abrégé "DPG"), avec une énamine ou un dithiophospate de zinc. Grâce au couplage amélioré avec l'élastomère, la présence de ces activateurs de couplage permettra par exemple de réduire le taux de charge inorganique renforçante.

II-4. Additifs divers

Bien entendu, les compositions conformes à l'invention contiennent, outre les composés déjà décrits, tout ou partie des constituants habituellement utilisés dans les compositions de caoutchouc diénique destinées à la fabrication de pneumatiques, comme par exemple des plastifiants, des pigments, des agents de protection du type antioxydants, antiozonants, un système de réticulation à base soit de soufre, soit de donneurs de soufre et/ou de peroxyde et/ou de bismaléimides, des accélérateurs de vulcanisation, des activateurs de vulcanisation, des huiles d'extension, etc... A la charge blanche renforçante de l'invention peut être également associée, si besoin est, une charge blanche conventionnelle non renforçante, comme par exemple des argiles, la bentonite, le talc, la craie, le kaolin.

Les compositions de caoutchouc conformes à l'invention peuvent également contenir, en complément des agents de couplage précités, des agents de recouvrement (comportant par exemple la seule fonction Y) de la charge inorganique renforçante ou plus généralement des agents d'aide à la mise en oeuvre susceptibles de manière connue, grâce à une amélioration de la dispersion de la charge inorganique renforçante dans la matrice de caoutchouc et à un abaissement de la viscosité des compositions, d'améliorer leur faculté de mise en oeuvre à l'état cru, ces agents, utilisés par exemple à un taux préférentiel compris entre 0,5 et 3 pce, étant par exemple des alkylalkoxysilanes (notamment des alkyltriéthoxysilanes comme par exemple le 1-octyl-triéthoxysilane commercialisé par la société Degussa-Hüls sous la dénomination Dynasylan Octeo ou le 1-hexa-décyl-triéthoxysilane commercialisé par la société Degussa-Hüls sous la dénomination Si216), des polyols, des polyéthers (par exemple des polyéthylèneglycols), des amines primaires, secondaires ou tertiaires (par exemple des trialcanol-amines), des polyorganosiloxanes hydroxylés ou hydrolysables, par exemple des $\alpha,\omega$-dihydroxy-polyorganosiloxanes (notamment des $\alpha,\omega$-dihydroxy-polydiméthylsiloxanes).

II-5. Préparation des compositions de caoutchouc

Les compositions sont fabriquées dans des mélangeurs appropriés, en utilisant deux phases de préparation successives bien connues de l'homme du métier : une première phase de travail ou malaxage thermo-mécanique (parfois qualifiée de phase "non-productive") à haute température, jusqu'à une température maximale (notée $T_{max}$) comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 60°C et 100°C, phase de finition au cours de laquelle est incorporé le système de réticulation ou vulcanisation ; de telles phases ont été décrites par exemple dans les demandes EP-A-0501227, EP-A-0735088, EP-A-0810258, WO00/05300 ou WO00/05301 précitées.

Le procédé de fabrication selon l'invention est caractérisé en ce qu'au moins la charge renforçante et l'agent de couplage sont incorporés par malaxage à l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre une température maximale comprise entre 110°C et 190°C, de préférence comprise entre 130°C et 180°C.

A titre d'exemple, la première phase (non-productive) est conduite en une seule étape thermomécanique au cours de laquelle on introduit, dans un mélangeur approprié tel qu'un mélangeur interne usuel, tous les constituants de base nécessaires, les éventuels agents de recouvrement ou de mise en oeuvre complémentaires et autres additifs divers, à l'exception du système de vulcanisation. Une seconde étape de travail thermomécanique peut être ajoutée dans ce mélangeur interne, après tombée du mélange et refroidissement intermédiaire (température de refroidissement de préférence inférieure à 100°C), dans le but de faire subir aux compositions un traitement thermique complémentaire, notamment pour améliorer encore la dispersion, dans la matrice élastomérique, de la charge renforçante et de son agent de couplage. La durée totale du malaxage, dans cette phase non-productive, est de préférence comprise entre 2 et 10 minutes.

Après refroidissement du mélange ainsi obtenu, on incorpore alors le système de vulcanisation à basse température, généralement dans un mélangeur externe tel qu'un mélangeur à cylindres ; le tout est alors mélangé (phase productive) pendant quelques minutes, par exemple entre 5 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis tels que des bandes de roulement, des nappes sommet, des flancs, des nappes carcasse, des talons, des protecteurs, des chambres à air ou des gommes intérieures étanches pour pneu sans chambre.

La vulcanisation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de vulcanisation adopté, de la cinétique de vulcanisation de la composition considérée ou encore de la taille du pneumatique.

Le système de vulcanisation proprement dit est préférentiellement à base de soufre et d'un accélérateur primaire de vulcanisation, en particulier d'un accélérateur du type sulfénamide: A ce système de vulcanisation de base viennent s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (en particulier diphénylguanidine), etc. Le soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à une bande de roulement de pneumatique. L'accélérateur primaire de vulcanisation est utilisé à un taux préférentiel compris entre 0,5 et 10 pce, plus préférentiellement compris entre 0,5 et 5,0 pce en particulier lorsque l'invention s'applique à une bande de roulement de pneumatique.

Il va de soi que l'invention concerne les compositions de caoutchouc précédemment décrites tant à l'état dit "cru" (i.e., avant cuisson) qu'à l'état dit "cuit" ou vulcanisé (i.e., après réticulation ou vulcanisation).

Bien entendu, les compositions conformes à l'invention peuvent être utilisées seules ou en coupage (i.e., en mélange) avec toute autre composition de caoutchouc utilisable pour la fabrication de pneumatiques.

## III. EXEMPLES DE REALISATION DE L'INVENTION

### III-1. Charges utilisées

Les caractéristiques des charges utilisées dans les exemples qui suivent sont résumées dans le tableau 1.

La charge A est un noir de carbone de grade pneumatique (N234), utilisé conventionnellement dans les bandes de roulement de pneumatiques. La charge B est un carbure de silicium conventionnel (i.e., non renforçant) utilisé habituellement comme poudre abrasive (SiC20000 de la société Sika Norton AS). La charge D est un carbure de silicium grossier, commercialisé par la société GoodFellow sous la référence SI 51 6010 (taille particules: 75 µm, d'après données catalogue). Enfin, les charges C, E et F sont des carbures de silicium renforçants, c'est-à-dire utilisables dans les compositions conformes à l'invention (caractéristiques a et b vérifiées).

La charge F est disponible commercialement (société MarkeTech International Inc. - référence "NP-S0140").

Quant aux charges C et E, elles ont été préparées de manière connue par pyrolyse laser de précurseurs gazeux, conformément à la publication précitée *Adv. Ceram. Mater.,* 3(6), 548-552 (1988), selon les étapes suivantes:

- un mélange gazeux (silane plus acétylène) est introduit verticalement, par l'intermédiaire d'un capillaire de 2 mm de diamètre intérieur, dans l'enceinte d'irradiation laser équipée d'une fenêtre de KCl transparente au faisceau laser;

- dans cette enceinte, le rayon laser (laser $CO_2$ continu permettant d'atteindre 1 kW de puissance), de distribution gaussienne, avec un diamètre de 12 mm et une densité de puissance maximum de 700 $W/cm^2$, intercepte le flux gazeux horizontalement et provoque la réaction de synthèse du carbure de silicium à partir du mélange gazeux, par résonance entre l'émission laser et une des bandes d'absorption infrarouge du réactif (silane) de longueur d'onde égale à celle du rayonnement laser;

- un flux d'argon (environ 2 L/min) prévient le dépôt de la poudre de carbure de silicium sur la fenêtre de KCl et entraîne le produit formé jusque dans le collecteur de poudre.

Le silane utilisé est $SiH_4$, avec un débit de l'ordre de 350 $cm^3$/min. L'acétylène est utilisé à un débit d'environ 190 $cm^3$/min. Dans ces conditions, le temps de résidence dans la zone réactionnelle (c'est-à-dire dans le faisceau laser) est d'environ 4 ms pour une vitesse de parcours de 2,9 m/s.

On note que les charges C, E et F présentent une taille de particules $d_w$ comprise entre 30 et 100 nm, très inférieure à celle des charges B ou D, du même ordre de grandeur que celle de la charge A. Leur surface BET est comprise entre 60 et 120 $m^2$/g. Leur vitesse de désagglomération $\alpha$ est avantageusement très élevée (toutes supérieures à $5.10^{-4}$ $\mu m^{-1}/s$, supérieures à $1.10^{-3}$ $\mu m^{-1}/s$ pour les charges C et E), plus de cent fois supérieure à celle de la charge D. L'aptitude à la désagglomération des noirs de carbone étant de manière connue excellente, très nettement supérieure à celle des autres charges, la mesure de la vitesse $\alpha$ pour la charge A n'est pas nécessaire.

Des vitesses $\alpha$ aussi élevées que celles mesurées sur ces carbures de silicium renforçants, notamment sur les charges C et E, sont inattendues pour une charge inorganique : le test de désagglomération aux ultrasons appliqué dans les mêmes conditions à une silice HDS connue ("Zeosil 1165MP") a conduit à une vitesse $\alpha$ environ cent fois plus faible.

Les figures 1, 2, 3 et 4 reproduisent les courbes d'évolution $[1/d_v(t) = f(t)]$ de la taille des agglomérats, enregistrées au test de désagglomération aux ultrasons, respectivement pour les charges B, C, E et F. On voit bien sur ces figures que les premiers points enregistrés ("t" variant de 0 à 30 s environ) correspondent à la mesure du diamètre moyen initial $d_v[0]$, suivis (après mise en action de la sonde ultrasons) d'un passage progressif (ici, "t" de 30 s à 3 min environ) à un régime stable de désagglomération pendant lequel l'inverse de "$d_v$" varie bien de manière sensiblement linéaire avec le temps "t" ; l'enregistrement des données est stoppé ici au bout de 8 à 9 minutes environ. On en déduit par un calcul élémentaire de régression linéaire, pris en charge par le calculateur du granulomètre, la vitesse de désagglomération $\alpha$ dans la zone de régime stable de désagglomération (entre 3-4 min et 8-9 min environ).

### III-2. Préparation des compositions

Les compositions testées ci-après sont préparées de manière connue, de la façon suivante : on introduit l'élastomère diénique (ou le mélange d'élastomères diéniques, le cas échéant) dans un mélangeur interne rempli à 75

%, dont la température initiale de cuve est d'environ 90°C ; puis, après un temps approprié de malaxage, par exemple de l'ordre de 1 minute, on ajoute tous les autres ingrédients, y compris la charge et l'agent de couplage associé, à l'exception du système de vulcanisation. On conduit alors un travail thermomécanique d'une durée de 10 minutes environ, avec une vitesse moyenne des palettes de 70 tours/min, jusqu'à obtenir une température de tombée d'environ 160°C.

On récupère le mélange ainsi obtenu, on le refroidit puis on ajoute le système de vulcanisation (soufre et accélérateur primaire type sulfénamide) sur un mélangeur externe (homo-finisseur) à 30°C, en mélangeant le tout (phase productive) pendant un temps approprié, compris entre 5 et 12 min selon les cas.

Les compositions ainsi obtenues sont ensuite calandrées soit sous la forme de plaques (épaisseur de 2 à 3 mm) de caoutchouc pour la mesure de leurs propriétés mécaniques, soit extrudées sous la forme de bandes de roulement de pneumatiques. La vulcanisation (cuisson) est effectuée à 150°C pendant 40 min, sous pression.

Dans tous les essais qui suivent, le carbure de silicium renforçant est présent, dans les compositions conformes à l'invention, à un taux préférentiel supérieur à 70 pce ; il constitue en outre la totalité ou plus de 90% en poids de la totalité de la charge renforçante, une fraction minoritaire (moins de 10%) de cette dernière pouvant être constituée par du noir de carbone.

III-3. Essais

A) Essai 1

Le but de cet essai est de démontrer qu'un carbure de silicium conventionnel, même en présence d'un agent de couplage performant, ne peut prétendre au qualificatif de charge inorganique renforçante.

On compare pour cela trois compositions de caoutchouc diénique typiquement utilisées pour la fabrication de bandes de roulement de pneumatiques, ces compositions étant toutes non conformes à l'invention. L'élastomère diénique est un SBR préparé en solution (SSBR), comportant 25% en masse de styrène, les motifs polybutadiène présents étant pour 58% des motifs polybutadiènes-1,2 et pour 23% des motifs polybutadiène-1,4 trans.

Ces trois compositions sont identiques aux différences près qui suivent:

- composition C-1 : charge A (noir de carbone);
- composition C-2 : charge B (SiC), sans agent de couplage;
- composition C-3 : charge B (SiC), avec agent de couplage.

Le noir de carbone choisi pour la composition témoin C-1 est un noir de grade pneumatique à très haut pouvoir renforçant, utilisé habituellement pour renforcer des bandes de roulement de pneumatiques tourisme.

Dans les compositions C-2 et C-3, le carbure de silicium est utilisé à iso-volume par rapport au noir de carbone (composition C-1). Quant à l'agent de couplage TESPT (Si69), il a été introduit à un taux correspondant à une couverture de surface totale des 78 pce de carbure de silicium, soit environ 9,3 $10^{-7}$ mole/m$^2$ de carbure de silicium. La composition C-1 qui sert ici de référence ne nécessite pas, de manière connue, d'agent de couplage puisqu'elle est renforcée par du noir de carbone.

Les tableaux 2 et 3 donnent successivement la formulation des différentes compositions (tableau 2 - taux des différents produits exprimés en pce), leurs propriétés avant et après cuisson à 150°C pendant 40 min (tableau 3). La figure 5 reproduit les courbes de module sécant vrai "M" (en MPa) en fonction de l'allongement (en %) ; ces courbes sont notées C1 à C3 et correspondent respectivement aux compositions de caoutchouc C-1 à C-3.

L'étude des différents résultats montre que les compositions C-2 et C-3 à base de carbure de silicium présentent après cuisson un niveau de renforcement très nettement inférieur à celui de la composition témoin C-1 à base de noir de carbone : contrainte à la rupture environ deux à trois fois inférieure, modules aux fortes déformations (M100 et M300) nettement inférieurs, une mesure de "bound rubber" impossible en raison de compositions délitées, autant d'indicateurs clairs pour l'homme du métier d'un niveau de renforcement médiocre pour les deux compositions à base du carbure de silicium conventionnel (charge B).

La figure 5 annexée confirme bien les résultats ci-dessus : on note que les courbes C2 et C3 sont situées très en-deçà de la courbe témoin C1, l'écart étant d'autant plus prononcé que l'allongement augmente ; ceci illustre clairement une très mauvaise qualité de renforcement entre le carbure de silicium (non renforçant) et l'élastomère. Certes, un niveau de renforcement supérieur est atteint en présence d'un agent de couplage tel que le TESPT (courbe C3 comparée à courbe C2), mais il reste très nettement inférieur à ce que l'on attend d'une véritable charge renforçante telle que le noir de carbone (courbe C1).

B Essai 2

Le but de ce deuxième essai est de démontrer qu'un carbure de silicium renforçant tel que décrit supra peut au contraire prétendre au qualificatif de charge inorganique renforçante.

On compare pour cela deux compositions de caoutchouc diénique utilisables pour la fabrication de pneumatiques, en particulier de bandes de roulement de pneumatiques tourisme. L'élastomère diénique est un SSBR comportant 27% en masse de styrène, et dont les motifs polybutadiène sont pour 25% des motifs polybutadiène-1,2 et pour 48% des motifs polybutadiène-1,4 trans.

Ces deux compositions sont identiques aux différences près qui suivent:

- composition C-4 (témoin): charge A (noir de carbone);
- composition C-5 (conforme à l'invention): charge C, avec agent de couplage (TESPT).

Dans la composition C-5, l'agent de couplage a été introduit à un taux de couverture surfacique sensiblement équivalent à celui choisi pour la composition C-3 précédente (soit environ 9,3 $10^{-7}$ mole/$m^2$ de carbure de silicium) ; bien entendu, la quantité d'agent de couplage utilisée est supérieure pour tenir compte de la plus grande surface BET du carbure de silicium renforçant ici testé. Quant à la composition témoin C-4, elle est conventionnellement chargée de noir de carbone.

Les tableaux 4 et 5 donnent successivement la formulation des différentes compositions (tableau 4 - taux des différents produits exprimés en pce), leurs propriétés avant et après cuisson à 150°C pendant 40 min (tableau 5). La figure 6 reproduit les courbes de module "M" (en MPa) en fonction de l'allongement (en %) ; ces courbes sont notées C4 et C5 et correspondent respectivement aux compositions C-4 et C-5.

L'étude des différents résultats montre que la composition de l'invention présente après cuisson un niveau de renforcement équivalent à celui de la composition témoin, avec des modules équivalents, notamment aux fortes déformations (M100 et M300), un rapport M300/M100 voisin, des mesures identiques au test de "bound rubber", autant d'indices de renforcement bien connus de l'homme du métier qui sont là pour attester de l'activité renforçante remarquable de la charge C, en présence de l'agent de couplage. La figure 6 annexée confirme bien les observations ci-dessus, avec des courbes C4 et C5 qui apparaissent quasiment confondues.

C) Essai 3

Dans ce troisième essai, on compare un autre carbure de silicium renforçant (charge E) d'une part à un noir de carbone conventionnel (charge A), d'autre part à un carbure de silicium non renforçant, du type "grossier" (charge D), tel qu'employé usuellement dans certaines bandes de roulement de l'art antérieur précité (voir notamment les documents précités JP-A-1990/091137, US-A-3878147).

On compare pour cela trois compositions de caoutchouc similaires à celles de l'essai 2 précédent, destinées à la fabrication de bandes de roulement pour pneumatiques tourisme ; ces trois compositions sont identiques aux différences près qui suivent:

- composition C-6 (témoin): charge A (noir de carbone);
- composition C-7 (non conforme à l'invention): charge D, avec agent de couplage;
- composition C-8 (conforme à l'invention): charge E, avec agent de couplage.

Dans les compositions C-7 et C-8, l'agent de couplage a été introduit à un taux de couverture surfacique équivalent à celui choisi pour la composition C-5 précédente (soit environ $9,3.10^{-7}$ mole/$m^2$ de carbure de silicium). La composition témoin C-6, chargée de noir de carbone, est équivalente à celle utilisée dans l'essai précédent (composition C-4).

Les tableaux 6 et 7 donnent successivement la formulation des différentes compositions (tableau 6 - taux des différents produits exprimés en pce), leurs propriétés avant et après cuisson à 150°C pendant 40 min (tableau 7). La figure 7 reproduit les courbes de module (en MPa) en fonction de l'allongement (en %) ; ces courbes sont notées C6 à C8 et correspondent respectivement aux compositions C-6 à C-8.

On note tout d'abord que la plasticité à l'état cru est aussi basse pour la composition C-8 de l'invention (92 UM), renforcée par le carbure de silicium renforçant, que pour la composition témoin (91 UM) renforcée par le noir de carbone. Ce résultat illustre immédiatement pour l'homme du métier une capacité de mise en oeuvre inattendue pour la composition conforme à l'invention, supérieure à celles jusqu'ici disponibles avec les charges inorganiques renforçantes connues. A titre d'exemple, une silice HDS de haute qualité ("Zeosil 1165MP") conduit, pour une formulation équivalente (i.e., à iso-volume de charge et même taux de couverture surfacique par l'agent de couplage), à une augmentation de plasticité de 15% environ par rapport à la solution témoin à base de noir de carbone.

Quant à la très faible valeur de plasticité observée sur la composition C-7, à base de carbure de silicium grossier, elle est à l'évidence due à un niveau de renforcement quasiment inexistant, comme illustré par la figure 7 (courbe C7) et par les propriétés après cuisson : très faibles propriétés mécaniques à la rupture, module E100 équivalent à E10, mesure de "bound rubber" impossible en raison d'une composition délitée, etc.

Par contre, la composition C-8 à base de carbure de silicium renforçant présente après cuisson un niveau de renforcement au moins équivalent à celui de la composition témoin C-6: propriétés mécaniques à la rupture, modules aux fortes déformations (E100 et E300) et mesures de "bound rubber" légèrement supérieurs, rapport E300/E100 et propriétés dynamiques ($\Delta G^*$ et $\tan(\delta)_{max}$) très voisins. La figure 7 annexée confirme bien les observations ci-dessus, avec une courbe C8 légèrement au-delà de la courbe témoin C6.

Enfin, de manière tout aussi inattendue, on note également que la cinétique de vulcanisation, illustrée par la constante de vitesse de conversion K, est aussi bonne pour la composition de l'invention que pour la composition à base de noir de carbone. Ce résultat apporté par le carbure de silicium renforçant constitue une amélioration notable par rapport aux compositions connues à base de charges blanches renforçantes telles que des silices HDS qui, à formulation équivalente, souffrent de manière connue d'une diminution très sensible de la constante K (généralement divisée par un facteur 2 à 3), par rapport à une composition conventionnelle chargée de noir de carbone.

<u>D) Essai 4</u>

Cet essai confirme l'excellente performance de renforcement, comparée à un noir de carbone de référence, des carbures de silicium renforçants, illustrée cette fois à l'aide d'un carbure de silicium commercial (charge F).

On compare deux compositions similaires à celles de l'essai 2 précédent, à ceci près que le noir de carbone (charge A - composition témoin C-9) est ici comparé à la charge commerciale F et qu'on utilise en outre, à titre d'agent de mise en oeuvre, un dérivé guanidique (DPG) dans la composition conforme à l'invention (composition C-10).

Les tableaux 8 et 9 donnent la formulation des deux compositions et leurs propriétés avant et après cuisson à 150°C pendant 40 min. Dans la composition C-10, la quantité d'agent de couplage utilisée est supérieure à celle des essais précédents pour tenir compte de la surface BET plus élevée du carbure de silicium ici testé. La figure 8 reproduit les courbes de module (en MPa) en fonction de l'allongement (en %) ; ces courbes sont notées C9 et C10 et correspondent respectivement aux compositions C-9 et C-10.

Certes la performance de la charge F peut apparaître légèrement inférieure à celle de la charge E précédemment testée, en raison vraisemblablement d'une aptitude à la désagglomération plus faible (vitesse $\alpha$ moins élevée) de la première, mais les performances du carbure de silicium renforçant restent tout à fait étonnantes. On constate que la composition de l'invention C-10 présente après cuisson un renforcement équivalent à celui de la composition témoin C-9, avec des modules aux fortes déformations (M100 et M300), un rapport M300/M100 et des mesures de "bound rubber" voisins, des propriétés mécaniques à la rupture légèrement supérieures. La figure 8 annexée confirme bien les observations ci-dessus avec des courbes C-9 et C-10 qui sont quasiment confondues, se croisant d'ailleurs vers les plus grands allongements au bénéfice de la composition de l'invention (courbe C10).

En conclusion, les carbures de silicium spécifiques des compositions conformes à l'invention confèrent à ces dernières des propriétés fort intéressantes, en particulier une capacité de renforcement et donc de résistance à l'usure au moins égale à celle atteinte avec du noir de carbone, jusqu'ici inconnue avec les carbures de silicium conventionnellement utilisés dans les compositions de caoutchouc pour pneumatiques de l'art antérieur.

La mise en oeuvre industrielle et la cinétique de cuisson des compositions de l'invention, comparables de manière inattendue à celles des compositions de caoutchouc conventionnelles chargées de noir de carbone, font des carbures de silicium renforçants précédemment décrits une alternative fort avantageuse à l'emploi de charges inorganiques renforçantes telles que des silices HDS.

L'invention trouve ainsi des applications préférentielles dans les compositions de caoutchouc utilisables pour la fabrication de bandes de roulement de pneumatiques présentant à la fois une faible résistance au roulement et une résistance élevée à l'usure, en particulier lorsque ces bandes de roulement sont destinées à des pneumatiques pour véhicules tourisme ou pour véhicules industriels du type Poids-lourd.

**Tableau 1**

| charge: | A (noir) | B (SiC) | C (SiC) | D (SiC) | E (SiC) | F(SiC) |
|---|---|---|---|---|---|---|
| densité He (g/ml) | 1.99 | 3.13 | 2.83 | 3.21 | 3.06 | 2.98 |
| surface BET ($m^2/g$) | 126 | 15.8 | 72 | 2 | 71 | 104 |
| $d_w$ (nm) | 69 | 419 | 59 | 75000 (*) | 63 | 43 |

(suite)

| charge: | A (noir) | B (SiC) | C (SiC) | D (SiC) | E (SiC) | F(SiC) |
|---|---|---|---|---|---|---|
| α (μ$m^{-1}$/s) | - | 2 $10^{-3}$ | 5.5 $10^{-3}$ | 8.3 $10^{-6}$ | 4.2 $10^{-3}$ | 9.8 $10^{-4}$ |
| (*) donnée catalogue fournisseur | | | | | | |

**Tableau 2**

| Composition N°: | C-1 | C-2 | C-3 |
|---|---|---|---|
| SSBR (1) | 100 | 100 | 100 |
| charge A | 50 | - | - |
| charge B | - | 78 | 78 |
| agent de couplage (2) | - | - | 0.65 |
| noir de carbone (N330) | 6 | 6 | 6 |
| ZnO | 2.5 | 2.5 | 2.5 |
| acide stéarique | 2 | 2 | 2 |
| antioxydant (3) | 1.9 | 1.9 | 1.9 |
| soufre | 1.5 | 1.5 | 1.5 |
| accélérateur (4) | 2.5 | 2.5 | 2.5 |
| (1) SBR solution avec 58% de motifs polybutadiène 1-2 ; 25% de styrène ; étendu avec 37,5% d'huile aromatique (soit 37,5 pce d'hutte pour 100 pce de SBR sec) ; Tg = -25°C ; exprimé en SBR sec;<br>(2) TESPT ("Si69" de la société DEGUSSA-HÜLS);<br>(3) N-1,3 diméthylbutyl N-phénylparaphénylènediamine ("Santoflex 6-PPD" de la société Flexsys);<br>(4) N-cyclohexyl-2-benzothiazylsulfénamide ("Santocure CBS" de la société Flexsys). | | | |

**Tableau 3**

| Composition N°: | C-1 | C-2 | C-3 |
|---|---|---|---|
| M10 (MPa) | 15.1 | 5.8 | 6.6 |
| M100 (MPa) | 11.5 | 4.2 | 6.2 |
| M300 (MPa) | 29.4 | 7.9 | 16.6 |
| M300/M100 | 2.6 | 1.9 | 2.7 |
| contrainte rupture (MPa) | 23.3 | 8.7 | 13.6 |
| allongement rupture (%) | 321 | 451 | 338 |
| "Bound rubber" (%) | 28 | (*) | (*) |
| (*) mesure impossible (composition délitée) | | | |

**Tableau 4**

| Composition N°: | C-4 | C-5 |
|---|---|---|
| SSBR (1) | 100 | 100 |

(suite)

| Composition N°: | C-4 | C-5 |
|---|---|---|
| charge A | 50 | - |
| charge C | - | 70.8 |
| agent de couplage (2) | - | 2.55 |
| noir de carbone (N330) | 6 | 6 |
| ZnO | 2.5 | 2.5 |
| acide stéarique | 2 | 2 |
| antioxydant (3) | 1.9 | 1.9 |
| soufre | 1.5 | 1.5 |
| accélérateur (4) | 2.5 | 2.5 |
| (1) SBR solution avec 25% de motifs polybutadiène 1-2 ; 27% de styrène ; étendu avec 37,5% d'huile aromatique (soit 37,5 pce d'huile pour 100 pce de SBR sec) ; Tg = -48°C ; exprimé en SBR sec;<br>(2) à (4) idem tableau 2. | | |

**Tableau 5**

| Composition N°: | C-4 | C-5 |
|---|---|---|
| M10 (MPa) | 7.3 | 7.9 |
| M100 (MPa) | 6.5 | 6.9 |
| M300 (MPa) | 23.5 | 22.8 |
| M300/M100 | 3.6 | 3.3 |
| contrainte rupture (MPa) | 23.4 | 26.6 |
| allongement rupture (%) | 385 | 440 |
| "Bound rubber" (%) | 26 | 26 |

**Tableau 6**

| Composition N°: | C-6 | C-7 | C-8 |
|---|---|---|---|
| SSBR (1) | 100 | 100 | 100 |
| charge A | 50 | - | - |
| charge D | - | 80.25 | - |
| charge E | - | - | 76.5 |
| agent de couplage (2) | - | 0.08 | 2.72 |
| ZnO | 2.5 | 2.5 | 2.5 |
| acide stéarique | 2 | 2 | 2 |
| antioxydant (3) | 1.9 | 1.9 | 1.9 |
| soufre | 1.5 | 1.5 | 1.5 |

(suite)

| Composition N°: | C-6 | C-7 | C-8 |
|---|---|---|---|
| accélérateur (4) | 2.5 | 2.5 | 2.5 |
| (1) à (4) : idem tableau 4. | | | |

**Tableau 7**

| Composition N°: | C-6 | C-7 | C-8 |
|---|---|---|---|
| plasticité (UM) | 91 | 56 | 92 |
| E10 (MPa) | 6.9 | 4.1 | 7.9 |
| E100 (MPa) | 6.4 | 3.9 | 7.3 |
| E300 (MPa) | 18.3 | - | 18.8 |
| E300/E100 | 2.9 | - | 2.6 |
| contrainte rupture (MPa) | 26.4 | 1.85 | 28.1 |
| allongement rupture (%) | 361 | 219 | 375 |
| "Bound rubber" (%) | 28.6 | (*) | 29.5 |
| K ($min^{-1}$) | 0.47 | - | 0.46 |
| $\Delta G^*$ | 3.75 | 0.33 | 4.22 |
| $\tan(\delta)_{max}$ | 0.249 | 0.107 | 0.237 |
| (*) mesure impossible (composition délitée) | | | |

**Tableau 8**

| Composition N°: | C-9 | C-10 |
|---|---|---|
| SSBR (1) | 100 | 100 |
| charge A | 50 | - |
| charge F | - | 74.5 |
| agent de couplage (2) | - | 3.87 |
| ZnO | 2.5 | 2.5 |
| acide stéarique | 2 | 2 |
| antioxydant (3) | 1.9 | 1.9 |
| DPG (5) | - | 0.97 |
| soufre | 1.5 | 1.5 |
| accélérateur (4) | 2.5 | 2.5 |
| (1) à (4) : idem tableau 4;<br>(5) Diphénylguanidine ("Vulcacit D" de la société Bayer). | | |

**Tableau 9**

| Composition N°: | C-9 | C-10 |
|---|---|---|
| M10 (MPa) | 7.13 | 9.24 |

(suite)

| Composition N°: | C-9 | C-10 |
|---|---|---|
| M100 (MPa) | 6.83 | 6.68 |
| M300 (MPa) | 24.34 | 22.39 |
| M300/M100 | 3.56 | 3.35 |
| contrainte rupture (MPa) | 23.57 | 28.44 |
| allongement rupture (%) | 375 | 432 |
| "Bound rubber" (%) | 23.1 | 20.9 |

**Revendications**

1. Composition de caoutchouc à base d'au moins un élastomère diénique, une charge inorganique renforçante, un agent de couplage assurant la liaison entre la charge inorganique et l'élastomère, **caractérisée en ce que** ladite charge inorganique comporte un carbure de silicium ayant les caractéristiques suivantes:

   - (a) une surface spécifique BET comprise entre 20 et 200 $m^2/g$;
   - (b) une taille moyenne (en masse) de particules $d_w$ comprise entre 10 et 350 nm.

2. Composition selon la revendication 1, la quantité de charge inorganique renforçante étant comprise entre 30 et 200 pce (parties en poids pour cent parties d'élastomère).

3. Composition selon la revendication 2, le taux de carbure de silicium étant supérieur à 50 pce.

4. Composition selon l'une quelconque des revendications 1 à 3, comportant, outre le carbure de silicium, de la silice ou de l'alumine à titre de charge inorganique renforçante.

5. Composition selon l'une quelconque des revendications 1 à 3, comportant, outre le carbure de silicium, un noir de carbone à titre de charge renforçante.

6. Composition selon la revendication 5, le noir de carbone étant présent à un taux compris entre 2 et 20 pce.

7. Composition selon l'une quelconque des revendications 1 à 6, la surface BET étant comprise entre 20 et 150 $m^2/g$.

8. Composition selon l'une quelconque des revendications 1 à 7, la taille $d_w$ étant comprise dans un domaine de 20 à 300 nm.

9. Composition selon l'une quelconque des revendications 1 à 8, le carbure de silicium présentant une vitesse de désagglomération notée $\alpha$, mesurée au test de désagglomération aux ultrasons à 20% de puissance d'une sonde de 600 W, qui est supérieure à $1.10^{-4}$ $\mu m^{-1}/s$.

10. Composition selon l'une quelconque des revendications 7 à 9, le carbure de silicium vérifiant au moins l'une des caractéristiques suivantes:

    - sa surface BET est comprise dans un domaine de 25 à 140 $m^2/g$;
    - sa taille de particules $d_w$ est comprise dans un domaine de 20 à 250 nm;
    - sa vitesse $\alpha$ est supérieure à $5.10^{-4}$ $\mu m^{-1}/s$.

11. Composition selon la revendication 10, le carbure de silicium ayant une vitesse $\alpha$ supérieure à $1.10^{-3}$ $\mu m^{-1}/s$.

12. Composition selon l'une quelconque des revendications 1 à 11, l'agent de couplage étant un alkoxysilane polysulfuré.

13. Composition selon l'une quelconque des revendications 1 à 12, l'élastomère diénique étant choisi dans le groupe constitué par les polybutadiènes, les polyisoprènes de synthèse, le caoutchouc naturel, les copolymères de butadiène-styrène, les copolymères de butadiène-isoprène, les copolymères de butadiène-acrylonitrile, les copolymères d'isoprène-styrène, les copolymères de butadiène-styrène-isoprène et les mélanges de ces élastomères.

**14.** Composition selon la revendication 13, l'élastomère diénique étant un copolymère de butadiène-styrène (SBR) ayant une teneur en styrène comprise entre 20% et 30% en poids, une teneur en liaisons vinyliques de la partie butadiénique comprise entre 15% et 65%, une teneur en liaisons trans-1,4 comprise entre 20% et 75% et une température de transition vitreuse comprise entre -20°C et -55°C.

**15.** Composition selon la revendication 14, le SBR étant un SBR préparé en solution (SSBR) et étant utilisé en mélange avec un polybutadiène possédant de préférence plus de 90% de liaisons cis-1,4.

**16.** Procédé d'obtention d'une composition de caoutchouc utilisable pour la fabrication de pneumatiques, dans lequel on incorpore à au moins (i) un élastomère diénique, au moins (ii) une charge inorganique renforçante et (iii) un agent de couplage assurant la liaison entre la charge inorganique et l'élastomère, **caractérisé en ce que** ladite charge inorganique comporte un carbure de silicium ayant les caractéristiques suivantes:

- (a) une surface spécifique BET comprise entre 20 et 200 $m^2/g$;
- (b) une taille moyenne (en masse) de particules $d_w$ comprise entre 10 et 350 nm.

et **en ce qu'**on malaxe thermomécaniquement le tout, en une ou plusieurs étapes, jusqu'à atteindre une température maximale comprise entre 110°C et 190°C.

**17.** Procédé selon là revendication 16, la surface BET étant comprise entre 20 et 150 $m^2/g$.

**18.** Procédé selon les revendications 16 ou 17, la taille $d_w$ étant comprise dans un domaine de 20 à 300 nm.

**19.** Procédé selon l'une quelconque des revendications 16 à 18, le carbure de silicium présentant une vitesse de désagglomération notée $\alpha$, mesurée au test de désagglomération aux ultrasons à 20% de puissance d'une sonde de 600 W, qui est supérieure à $1.10^{-4}$ $\mu m^{-1}/s$.

**20.** Procédé selon l'une quelconque des revendications 17 à 19, le carbure de silicium vérifiant au moins l'une des caractéristiques suivantes:

- sa surface BET est comprise dans un domaine de 25 à 140 $m^2/g$;
- sa taille de particules $d_w$ est comprise dans un domaine de 20 à 250 nm;
- sa vitesse $\alpha$ est supérieure à $5.10^{-4}$ $\mu m^{-1}/s$.

**21.** Procédé selon la revendication 20, le carbure de silicium ayant une vitesse $\alpha$ supérieure à $1.10^{-3}$ $\mu m^{-1}/s$.

**22.** Procédé selon l'une quelconque des revendications 16 à 21, la quantité de charge inorganique renforçante étant comprise entre 30 et 200 pce (parties en poids pour cent parties d'élastomère).

**23.** Procédé selon la revendication 22, le taux de carbure de silicium étant supérieur à 50 pce.

**24.** Procédé selon l'une quelconque des revendications 16 à 23, comportant, outre le carbure de silicium, de la silice ou de l'alumine à titre de charge inorganique renforçante.

**25.** Procédé selon l'une quelconque des revendications 16 à 23, comportant, outre le carbure de silicium, un noir de carbone à titre de charge renforçante.

**26.** Procédé selon la revendication 25, le noir de carbone étant présent à un taux compris entre 2 et 20 pce.

**27.** Procédé selon l'une quelconque des revendications 16 à 26, l'élastomère diénique étant choisi dans le groupe constitué par les polybutadiènes, les polyisoprènes de synthèse, le caoutchouc naturel, les copolymères de butadiène-styrène, les copolymères de butadiène-isoprène, les copolymères de butadiène-acrylonitrile, les copolymères d'isoprène-styrène, les copolymères de butadiène-styrène-isoprène et les mélanges de ces élastomères.

**28.** Procédé selon la revendication 27, l'élastomère diénique étant un copolymère de butadiène-styrène (SBR) ayant

une teneur en styrène comprise entre 20% et 30% en poids, une teneur en liaisons vinyliques de la partie butadiénique comprise entre 15% et 65%, une teneur en liaisons trans-1,4 comprise entre 20% et 75% et une température de transition vitreuse comprise entre -20°C et -55°C.

**29.** Procédé selon la revendication 28, le SBR étant un SBR préparé en solution (SSBR) et étant utilisé en mélange avec un polybutadiène possédant de préférence plus de 90% de liaisons cis-1,4.

**30.** Procédé selon l'une quelconque des revendications 16 à 29, la température maximale de malaxage étant comprise entre 130°C et 180°C.

**31.** Utilisation d'une composition de caoutchouc conforme à l'une quelconque des revendications 1 à 15, pour la fabrication d'articles en caoutchouc.

**32.** Utilisation selon la revendication 31, pour la fabrication de pneumatiques ou de produits semi-finis en caoutchouc destinés aux pneumatiques, ces produits semi-finis étant choisis dans le groupe constitué par les bandes de roulement, les sous-couches de bandes de roulement, les nappes sommet, les flancs, les nappes carcasse, les talons, les protecteurs, les chambres à air et les gommes intérieures étanches pour pneumatique sans chambre.

**33.** Utilisation à titre de charge renforçante, dans une composition de caoutchouc diénique, d'un carbure de silicium ayant les caractéristiques suivantes:

- (a) une surface spécifique BET comprise entre 20 et 200 $m^2/g$;
- (b) une taille moyenne (en masse) de particules $d_w$ comprise entre 10 et 350 nm.

**34.** Utilisation selon la revendication 33, la surface BET étant comprise entre 20 et 150 $m^2/g$.

**35.** Utilisation selon les revendications 33 ou 34, la taille $d_w$ étant comprise dans un domaine de 20 à 300 nm.

**36.** Utilisation selon l'une quelconque des revendications 33 à 35, le carbure de silicium présentant une vitesse de désagglomération notée $\alpha$, mesurée au test de désagglomération aux ultrasons à 20% de puissance d'une sonde de 600 W, qui est supérieure à $1.10^{-4}$ $\mu m^{-1}/s$.

**37.** Utilisation selon l'une quelconque des revendications 33 à 36, le carbure de silicium vérifiant au moins l'une des caractéristiques suivantes:

- sa surface BET est comprise dans un domaine de 25 à 140 $m^2/g$;
- sa taille de particules $d_w$ est comprise dans un domaine de 20 à 250 nm;
- sa vitesse $\alpha$ est supérieure à $5.10^{-4}$ $\mu m^{-1}/s$.

**38.** Utilisation selon les revendications 36 ou 37, le carbure de silicium ayant une vitesse $\alpha$ supérieure à $1.10^{-3}$ $\mu m^{-1}/s$.

**39.** Utilisation selon l'une quelconque des revendications 33 à 38, le carbure de silicium étant utilisé à un taux supérieur à 50 pce (parties en poids pour cent parties d'élastomère).

**40.** Procédé pour renforcer une composition de caoutchouc diénique, **caractérisé en ce qu'**on incorpore à cette composition à l'état cru, par malaxage thermo-mécanique, un carbure de silicium ayant les caractéristiques suivantes:

- (a) une surface spécifique BET comprise entre 20 et 200 $m^2/g$;
- (b) une taille moyenne (en masse) de particules $d_w$ comprise entre 10 et 350 nm.

**41.** Procédé selon la revendication 40, la surface BET étant comprise entre 20 et 150 $m^2/g$.

**42.** Procédé selon les revendications 40 ou 41, la taille $d_w$ étant comprise dans un domaine de 20 à 300 nm.

**43.** Procédé selon l'une quelconque des revendications 40 à 42, le carbure de silicium présentant une vitesse de désagglomération notée $\alpha$, mesurée au test de désagglomération aux ultrasons à 20% de puissance d'une sonde de 600 W, qui est supérieure à $1.10^{-4}$ $\mu m^{-1}/s$.

**44.** Procédé selon l'une quelconque des revendications 40 à 43, le carbure de silicium vérifiant au moins l'une des caractéristiques suivantes:

- sa surface BET est comprise dans un domaine de 25 à 140 $m^2/g$;
- sa taille de particules $d_w$ est comprise dans un domaine de 20 à 250 nm;
- sa vitesse $\alpha$ est supérieure à $5.10^{-4}$ $\mu m^{-1}/s$.

**45.** Procédé selon la revendication 44, le carbure de silicium ayant une vitesse $\alpha$ supérieure à $1.10^{-3}$ $\mu m^{-1}/s$.

**46.** Procédé selon l'une quelconque des revendications 40 à 45, le carbure de silicium étant utilisé à un taux supérieur à 50 pce (parties en poids pour cent parties d'élastomère).

**47.** Article en caoutchouc comportant une composition selon l'une quelconque des revendications 1 à 15.

**48.** Produit semi-fini pour pneumatique comportant une composition de caoutchouc conforme à l'une quelconque des revendications 1 à 15, ce produit étant choisi en particulier dans le groupe constitué par les bandes de roulement, les sous-couches de ces bandes de roulement, les nappes sommet, les flancs, les nappes carcasse, les talons, les protecteurs, les chambres à air et les gommes intérieures étanches pour pneu sans chambre.

**49.** Pneumatique comportant une composition de caoutchouc selon l'une quelconque des revendications 1 à 15.

**50.** Bande de roulement de pneumatique à base d'une composition de caoutchouc selon l'une quelconque des revendications 1 à 15.

## Claims

**1.** A rubber composition based on at least a diene elastomer, a reinforcing inorganic filler, a coupling agent providing the bond between the inorganic filler and the elastomer, **characterised in that** said inorganic filler comprises a silicon carbide having the following characteristics:

- (a) a BET specific surface area of between 20 and 200 $m^2/g$;
- (b) an average particle size (by mass), $d_w$, of between 10 and 350 nm.

**2.** A composition according to Claim 1, the quantity of reinforcing inorganic filler being between 30 and 200 phr (parts by weight per hundred parts of elastomer).

**3.** A composition according to Claim 2, the amount of silicon carbide being greater than 50 phr.

**4.** A composition according to any one of Claims 1 to 3, comprising, in addition to the silicon carbide, silica or alumina as reinforcing inorganic filler.

**5.** A composition according to any one of Claims 1 to 3, comprising, in addition to the silicon carbide, a carbon black as reinforcing filler.

**6.** A composition according to Claim 5, the carbon black being present in an amount of between 2 and 20 phr.

**7.** A composition according to any one of Claims 1 to 6, the BET surface area being between 20 and 150 $m^2/g$.

**8.** A composition according to any one of Claims 1 to 7, the size $d_w$ lying within a range from 20 to 300 nm.

**9.** A composition according to any one of Claims 1 to 8, the silicon carbide having a disagglomeration rate, $\alpha$, measured in the ultrasound disagglomeration test at 20% power of a 600 W probe, which is greater than $1x10^{-4}$ $\mu m^{-1}/s$.

**10.** A composition according to any one of Claims 7 to 9, the silicon carbide satisfying at least one of the following characteristics:

- its BET surface area lies within a range from 25 to 140 $m^2/g$;

- its particle size $d_w$ lies within a range from 20 to 250 nm;
- its rate $\alpha$ is greater than $5x10^{-4}$ $\mu m^{-1}/s$.

**11.** A composition according to Claim 10, the silicon carbide having a rate $\alpha$ which is greater than $1x10^{-3}$ $\mu m^{-1}/s$.

**12.** A composition according to any one of Claims 1 to 11, the coupling agent being a polysulphurised alkoxysilane.

**13.** A composition according to any one of Claims 1 to 12, the diene elastomer being selected from the group which consists of polybutadienes, synthetic polyisoprenes, natural rubber, butadiene-styrene copolymers, butadiene-isoprene copolymers, butadiene-acrylonitrile copolymers, isoprene-styrene copolymers, butadiene-styrene-isoprene copolymers and mixtures of these elastomers.

**14.** A composition according to Claim 13, the diene elastomer being a butadiene-styrene copolymer (SBR) having a styrene content of between 20% and 30% by weight, a content of vinyl bonds of the butadiene fraction of between 15% and 65%, a content of trans-1,4 bonds of between 20% and 75% and a glass transition temperature of between -20°C and -55°C.

**15.** A composition according to Claim 14, the SBR being an SBR prepared in solution (SSBR) and being used in a mixture with a polybutadiene having preferably more than 90% cis-1,4 bonds.

**16.** A process for obtaining a rubber composition usable for the manufacture of tyres, in which there are incorporated at least (i) a diene elastomer, at least (ii) a reinforcing inorganic filler and (iii) a coupling agent providing the bond between the inorganic filler and the elastomer, **characterised in that** said inorganic filler comprises a silicon carbide having the following characteristics:

- (a) a BET specific surface area of between 20 and 200 $m^2/g$;
- (b) an average particle size (by mass), $d_w$, of between 10 and 350 nm.

and **in that** the entire mixture is kneaded thermomechanically, in one or more stages, until a maximum temperature of between 110°C and 190°C is reached.

**17.** A process according to Claim 16, the BET surface area being of between 20 and 150 $m^2/g$.

**18.** A process according to Claims 16 or 17, the size $d_w$, lying within a range from 20 to 300 nm.

**19.** A process according to any one of Claims 16 to 18, the silicon carbide having a disagglomeration rate, $\alpha$, measured in the ultrasound disagglomeration test at 20% power of a 600 W probe, which is greater than $1x10^{-4}$ $\mu m^{-1}/s$

**20.** A process according to any one of Claims 17 to 19, the silicon carbide satisfying at least one of the following characteristics:

- its BET surface area lies within a range from 25 to 140 $m^2/g$;
- its particle size $d_w$ lies within a range from 20 to 250 nm;
- its rate $\alpha$ is greater than $5x10^{-4}$ $\mu m^{-1}/s$.

**21.** A process according to Claim 20, the silicon carbide having a rate $\alpha$ which is greater than $1x10^{-3}$ $\mu m^{-1}/s$.

**22.** A process according to any one of Claims 16 to 21, the quantity of reinforcing inorganic filler being between 30 and 200 phr (parts by weight per hundred parts of elastomer).

**23.** A process according to Claim 22, the amount of silicon carbide being greater than 50 phr.

**24.** A process according to any one of Claims 16 to 23, comprising, in addition to the silicon carbide, silica or alumina as reinforcing inorganic filler.

**25.** A process according to any one of Claims 16 to 23, comprising, in addition to the silicon carbide, a carbon black as reinforcing filler.

**26.** A process according to Claim 25, the carbon black being present in an amount of between 2 and 20 phr.

**27.** A process according to any one of Claims 16 to 26, the diene elastomer being selected from the group which consists of polybutadienes, synthetic polyisoprenes, natural rubber, butadiene-styrene copolymers, butadiene-isoprene copolymers, butadiene-acrylonitrile copolymers, isoprene-styrene copolymers, butadiene-styrene-isoprene copolymers and mixtures of these elastomers.

**28.** A process according to Claim 27, the diene elastomer being a butadiene-styrene copolymer (SBR) having a styrene content of between 20% and 30% by weight, a content of bonds of the butadiene fraction of between 15% and 65%, a content of trans-1,4 bonds of between 20% and 75% and a glass transition temperature of between -20°C and -55°C.

**29.** A process according to Claim 28, the SBR being an SBR prepared in solution (SSBR) and being used in a mixture with a polybutadiene having preferably more than 90% cis-1,4 bonds.

**30.** A process according to any one of Claims 16 to 29, the maximum kneading temperature being between 130°C and 180°C.

**31.** The use of a rubber composition according to any one of Claims 1 to 15 for the manufacture of rubber articles.

**32.** The use according to Claim 31, for the manufacture of tyres and semi-finished rubber products intended for such tyres, these semi-finished articles being selected from the group comprising treads, underlayers for treads, crown plies, sidewalls, carcass plies, beads, protectors, inner tubes and airtight internal rubbers for tubeless tyres.

**33.** The use, as reinforcing filler, in a diene rubber composition, of a silicon carbide having the following characteristics:

- (a) a BET specific surface area of between 20 and 200 $m^2/g$;
- (b) an average particle size (by mass), $d_w$, of between 10 and 350 nm.

**34.** The use according to Claim 33, the BET surface area being between 20 and 150 $m^2/g$.

**35.** The use according to Claim 33 or 34, the size $d_w$ lying within a range from 20 to 300 nm.

**36.** The use according to any one of Claims 33 to 35, the silicon carbide having a disagglomeration rate, $\alpha$, measured in the ultrasound disagglomeration test at 20% power of a 600 W probe, which is greater than $1x10^{-4}$ $\mu m^{-1}/s$.

**37.** The use according to any one of Claims 33 to 36, the silicon carbide satisfying at least one of the following characteristics:

- its BET surface area lies within a range from 25 to 140 $m^2/g$;
- its particle size $d_w$ lies within a range from 20 to 250 nm;
- its rate $\alpha$ is greater than $5x10^{-4}$ $\mu m^{-1}/s$.

**38.** The use according to Claims 36 or 37, the silicon carbide having a rate $\alpha$ which is greater than $1x10^{-3}$ $\mu m^{-1}/s$.

**39.** The use according to any one of Claims 33 to 38, the silicon carbide being used in an amount greater than 50 phr (parts by weight per hundred parts of elastomer).

**40.** A process for reinforcing a diene rubber composition, **characterised in that** a silicon carbide having the following characteristics is incorporated in this composition in the uncured state by thermomechanical kneading:

- (a) a BET specific surface area of between 20 and 200 $m^2/g$;
- (b) an average particle size (by mass), $d_w$, of between 10 and 350 nm.

**41.** A process according to Claim 40, the BET surface area being of between 20 and 150 $m^2/g$.

**42.** A process according to Claims 40 or 41, the size $d_w$ lying within a range from 20 to 300 nm.

**43.** A process according to any one of Claims 40 to 42, the silicon carbide having a disagglomeration rate, $\alpha$, measured

in the ultrasound disagglomeration test at 20% power of a 600 W probe, which is greater than $1x10^{-4}$ $\mu m^{-1}/s$.

**44.** A process according to any one of Claims 40 to 43, the silicon carbide satisfying at least one of the following characteristics:

- its BET surface area lies within a range from 25 to 140 $m^2/g$;
- its particle size $d_w$ lies within a range from 20 to 250 nm;
- its rate $\alpha$ is greater than $5x10^{-4}$ $\mu m^{-1}/s$.

**45.** A process according to Claim 44, the silicon carbide having a rate $\alpha$ which is greater than $1x10^{-3}$ $\mu m^{-1}/s$.

**46.** A process according to any one of Claims 40 to 45, the silicon carbide being used in an amount greater than 50 phr (parts by weight per hundred parts of elastomer).

**47.** A rubber article comprising a composition according to any one of Claims 1 to 15.

**48.** A semi-finished product for tyres, comprising a rubber composition according to any one of Claims 1 to 15, this product being selected in particular from among the group comprising treads, underlayers for these treads, crown plies, sidewalls, carcass plies, beads, protectors, inner tubes and airtight internal rubbers for tubeless tyres.

**49.** A tyre comprising a rubber composition according to any one of Claims 1 to 15.

**50.** A tyre tread based on a rubber composition according to any one of Claims 1 to 15.

## Patentansprüche

**1.** Kautschukmischung auf der Basis mindestens eines Dienelastomers, eines verstärkenden anorganischen Füllstoffs und eines Kupplungsmittels, der die Verknüpfung zwischen dem anorganischen Füllstoff und dem Elastomer sicherstellt, **dadurch gekennzeichnet, dass** der anorganische Füllstoff ein Siliciumcarbid mit den folgenden Eigenschaften enthält:

- (a) eine spezifische BET-Oberfläche von 20 bis 200 $m^2/g$;
- (b) einer mittleren (auf die Masse bezogen) Partikelgröße $d_w$ von 10 bis 350 nm.

**2.** Zusammensetzung nach Anspruch 1, wobei die Menge des anorganischen verstärkenden Füllstoffs im Bereich von 30 bis 200 pce (Gewichtsteile auf einhundert Teile Elastomer) liegt.

**3.** Zusammensetzung nach Anspruch 2, wobei der Gehalt an Siliciumcarbid über 50 pce liegt.

**4.** Zusammensetzung nach einem der Ansprüche 1 bis 3, die ferner neben dem Siliciumcarbid Kieselsäure oder Aluminiumoxid als verstärkenden anorganischen Füllstoff enthält.

**5.** Zusammensetzung nach einem der Ansprüche 1 bis 3, die neben dem Siliciumcarbid Ruß als verstärkenden Füllstoff enthält.

**6.** Zusammensetzung nach Anspruch 5, wobei der Ruß in einer Menge von 2 bis 20 pce enthalten ist.

**7.** Zusammensetzung nach einem der Ansprüche 1 bis 6, wobei die BET-Oberfläche im Bereich von 20 bis 150 $m^2/g$ liegt.

**8.** Zusammensetzung nach einem der Ansprüche 1 bis 7, wobei die Größe $d_w$ im Bereich von 20 bis 300 nm liegt.

**9.** Zusammensetzung nach einem der Ansprüche 1 bis 8, wobei das Siliciumcarbid eine als $\alpha$ bezeichnete Desagglomerationsgeschwindigkeit, die im Test zur Desagglomeration mit Ultraschall bei 20 % der Leistung einer Sonde von 600 W gemessen wird, über $1.10^{-4}$ $\mu m^{-1}/s$ aufweist.

**10.** Zusammensetzung nach einem der Ansprüche 7 bis 9, wobei das Siliciumcarbid mindestens eines der folgenden

Merkmale erfüllt:

- seine BET-Oberfläche liegt im Bereich von 25 bis 140 $m^{21}$/g;
- seine Partikelgröße $d_w$ liegt im Bereich von 20 bis 250 nm;
- seine Geschwindigkeit $\alpha$ liegt über $5{\cdot}0^{-4}$ $\mu m^{-1}$/s.

**11.** Zusammensetzung nach Anspruch 10, wobei das Siliciumcarbid eine Geschwindigkeit $\alpha$ über $1{\cdot}10^{-3}$ $\mu m^{-1}$/s aufweist.

**12.** Zusammensetzung nach einem der Ansprüche 1 bis 11, wobei das Kupplungsmittel ein Alkoxysilanpolysulfid ist.

**13.** Zusammensetzung nach einem der Ansprüche 1 bis 12, wobei das Dienelastomer unter den Polybutadienen, synthetischen Polyisoprenen, Naturkautschuk, Butadien-Styrol-Copolymeren, Butadien-Isopren-Copolymeren, Butadien-Acrylnitril-Copolymeren, Isopren-Styrol-Copolymeren, Butadien-Styrol-Isopren-Copolymeren und den Gemischen dieser Elastomere ausgewählt ist.

**14.** Zusammensetzung nach Anspruch 13, wobei das Dienelastomer ein Copolymer Butadien-Styrol (SBR) mit einem Styrolgehalt von 20 bis 30 Gew.-%, einem Gehalt an Vinylbindungen des Butadienteils von 15 bis 65 %, einem Gehalt an trans-1,4-Bindungen von 20 bis 25 % und einer Glasübergangstemperatur von -20 bis -55 °C ist.

**15.** Zusammensetzung nach Anspruch 14, wobei der SBR ein in Lösung hergestellter SBR (SSBR) ist und im Gemisch mit einem Polybutadien verwendet wird, das vorzugsweise mehr als 90 % cis-1,4-Bindungen besitzt.

**16.** Verfahren zur Herstellung einer Kautschukmischung, die für die Herstellung von Luftreifen verwendbar ist, bei dem zumindest (i) ein Dienelastomer, zumindest (ii) ein anorganischer verstärkender Füllstoff und (iii) ein Kupplungsmittel, das die Verknüpfung zwischen dem anorganischen Füllstoff und dem Elastomer sicherstellt, eingebracht wird, **dadurch gekennzeichnet, dass** der anorganische Füllstoff Siliciumcarbid mit den folgenden Merkmalen umfasst:

- (a) eine spezifische BET-Oberfläche von 20 bis 200 $m^2$/g;
- (b) einer mittleren (auf die Masse bezogen) Partikelgröße $d_w$ von 10 bis 350 nm

und das Ganze thermo-mechanisch in einem oder mehreren Schritten bis zum Erreichen einer Maximaltemperatur von 110 bis 190 °C geknetet wird.

**17.** Verfahren nach Anspruch 16, wobei die BET-Oberfläche im Bereich von 20 bis 150 $m^2$/g liegt.

**18.** Verfahren nach den Ansprüchen 16 oder 17, wobei die Größe $d_w$ im Bereich von 20 bis 300 nm liegt.

**19.** Verfahren nach einem der Ansprüche 16 bis 18, wobei das Siliciumcarbid eine als $\alpha$ bezeichnete Desagglomerationsgeschwindigkeit, die im Test zur Desagglomeration mit Ultraschall bei 20 % der Leistung einer Sonde von 600 W gemessen wird, über $1{\cdot}10^{-4}$ $\mu m^{-1}$/s gemessen wird.

**20.** Verfahren nach einem der Ansprüche 17 bis 19, wobei das Siliciumcarbid mindestens eines der folgenden Merkmale erfüllt:

- seine BET-Oberfläche liegt im Bereich von 25 bis 140 $m^{21}$/g;
- seine Partikelgröße $d_w$ liegt im Bereich von 20 bis 250 nm;
- seine Geschwindigkeit $\alpha$ liegt über $5{\cdot}10^{-4}$ $\mu$m-1 / s.

**21.** Verfahren nach Anspruch 20, wobei das Siliciumcarbid eine Geschwindigkeit $\alpha$ über $1{\cdot}10^{-3}$ $\mu m^{-1}$/s hat.

**22.** Verfahren nach einem der Ansprüche 16 bis 21, wobei der Mengenanteil des anorganischen verstärkenden Füllstoffs im Bereich von 30 bis 200 pce (Gewichtsteile auf 100 Teile Elastomer) liegt.

**23.** Verfahren nach Anspruch 22, wobei der Gehalt an Siliciumcarbid über 50 pce liegt.

**24.** Verfahren nach einem der Ansprüche 16 bis 23, bei dem neben dem Siliciumcarbid Kieselsäure oder Aluminiumoxid als anorganischer verstärkender Füllstoff enthalten ist.

**25.** Verfahren nach einem der Ansprüche 16 bis 23, bei dem neben dem Siliciumcarbid Ruß als verstärkender Füllstoff enthalten ist.

**26.** Verfahren nach Anspruch 25, wobei der Ruß in einem Gehalt von 2 bis 20 pce vorliegt.

**27.** Verfahren nach einem der Ansprüche 16 bis 26, wobei das Dienelastomer unter den Polybutadienen, synthetischen Polyisoprenen, Naturkautschuk, Butadien-Styrol-Copolymeren, Butadien-Isopren-Copolymeren, Butadien-Acrylnitril-Copolymeren, Isopren-Styrol-Copolymeren, Butadien-Styrol-Isopren-Copolymeren und den Gemischen dieser Elastomere ausgewählt ist.

**28.** Verfahren nach Anspruch 27, wobei das Dienelastomer ein Copolymer Butadien-Styrol (SBR) mit einem Styrolgehalt von 20 bis 30 Gew.-%, einem Gehalt an Vinylbindungen des Butadienteils von 15 bis 65 %, einem Gehalt an trans-1,4-Bindungen von 20 bis 25 % und einer Glasübergangstemperatur von -20 bis -55 °C ist.

**29.** Verfahren nach Anspruch 28, wobei der SBR ein in Lösung hergestellter SBR (SSBR) ist und im Gemisch mit einem Polybutadien verwendet wird, das vorzugsweise mehr als 90 % Cis-1,4-Bindungen besitzt.

**30.** Verfahren nach einem der Ansprüche 16 bis 29, wobei die Maximaltemperatur beim Kneten im Bereich von 130 bis 180 °C liegt.

**31.** Verwendung einer Kautschukmischung nach einem der Ansprüche 1 bis 15 für die Herstellung von Gegenständen aus Kautschuk.

**32.** Verwendung nach Anspruch 31 für die Herstellung von Luftreifen oder Halbfertigprodukten aus Kautschuk, die für Luftreifen vorgesehen sind, wobei diese Halbfertigprodukte unter den Laufstreifen, Unterplatten für Laufstreifen, Scheitellagen, Seitengummis, Karkassenlagen, Wülsten, Protektoren, Luftkammern und dichten Innengummis für schlauchlose Reifen ausgewählt sind.

**33.** Verwendung eines Siliciumcarbids mit den folgenden Merkmalen als verstärkenden Füllstoff in einer Dienkautschukmischung:

- (a) eine spezifische BET-Oberfläche von 20 bis 200 $m^2/g$;
- (b) einer mittleren (auf die Masse bezogen) Partikelgröße $d_w$ von 10 bis 350 nm.

**34.** Verwendung nach Anspruch 33, wobei die BET-Oberfläche im Bereich von 20 bis 150 $m^2/g$ liegt.

**35.** Verwendung nach den Ansprüchen 33 oder 34, wobei die Größe $d_w$ im Bereich von 20 bis 300 nm liegt.

**36.** Verwendung nach einem der Ansprüche 33 bis 35, wobei das Siliciumcarbid eine als $\alpha$ bezeichnete Desagglomerationsgeschwindigkeit, die im Test zur Desagglomeration mit Ultraschall bei 20 % der Leistung einer Sonde von 600 W gemessen wird, über $1.10^{-4}$ $\mu m^{-1}/s$ gemessen wird.

**37.** Verwendung nach einem der Ansprüche 33 bis 36, wobei das Siliciumcarbid mindestens eines der folgenden Merkmale erfüllt:

- seine BET-Oberfläche liegt im Bereich von 25 bis 140 $m^{21}/g$;
- seine Partikelgröße $d_w$ liegt im Bereich von 20 bis 250 nm;
- seine Geschwindigkeit $\alpha$ liegt über $5.10^{-4}$ $\mu m^{-1}/s$.

**38.** Verwendung nach einem der Ansprüche 36 oder 37, wobei das Siliciumcarbid eine Geschwindigkeit $\alpha$ über $1\cdot10^{-3}$ $\mu m^{-1}/s$ aufweist.

**39.** Verwendung nach einem der Ansprüche 32 bis 38, wobei das Siliciumcarbid in einer Menge von 50 pce (Gewichtsteile auf 100 Teile Elastomer) verwendet wird.

**40.** Verfahren zur Verstärkung einer Dienkautschukmischung, **dadurch gekennzeichnet, dass** in die Zusammensetzung im Rohzustand durch thermo-mechanisches Kneten ein Siliciumcarbid mit den folgenden Merkmalen eingearbeitet wird:

- (a) einer spezifischen BET-Oberfläche von 20 bis 200 $m^2/g$;
- (b) einer mittleren (auf die Masse bezogen) Partikelgröße $d_w$ von 10 bis 350 nm.

**41.** Verfahren nach Anspruch 40, wobei die BET-Oberfläche im Bereich von 20 bis 150 $m^2/g$ liegt.

**42.** Verfahren nach den Ansprüchen 40 oder 41, wobei die Größe $d_w$ im Bereich von 20 bis 300 nm liegt.

**43.** Verfahren nach einem der Ansprüche 40 bis 42, wobei das Siliciumcarbid eine als $\alpha$ bezeichnete Desagglomerationsgeschwindigkeit, die im Test zur Desagglomeration mit Ultraschall bei 20 % der Leistung einer Sonde von 600 W gemessen wird, über $1 \cdot 10^{-4}$ $\mu m^{-1}/s$ gemessen wird.

**44.** Verfahren nach einem der Ansprüche 40 bis 43, wobei das Siliciumcarbid mindestens eines der folgenden Merkmale erfüllt:

- seine BET-Oberfläche liegt im Bereich von 25 bis 140 $m^{21}/g$;
- seine Partikelgröße $d_w$ liegt im Bereich von 20 bis 250 nm;
- seine Geschwindigkeit $\alpha$ liegt über $5 \cdot 10^{-4}$ $\mu m^{-1}/s$.

**45.** Verfahren nach Anspruch 44, wobei das Siliciumcarbid eine Geschwindigkeit $\alpha$ über $1 \cdot 10^{-3}$ $\mu m^{-1}/s$ hat.

**46.** Verfahren nach einem der Ansprüche 40 bis 45, wobei das Siliciumcarbid in einer Menge über 50 pce (Gewichtsteile auf 100 Teile Elastomer) verwendet wird.

**47.** Gegenstand aus Kautschuk, der eine Zusammensetzung nach einem der Ansprüche 1 bis 15 enthält.

**48.** Halbfertigprodukt für Luftreifen, das eine Kautschukmischung nach einem der Ansprüche 1 bis 15 enthält, wobei dieses Produkt insbesondere unter den Laufstreifen, Unterplatten für Laufstreifen, Scheitellagen, Seitengummis, Karkassenlagen, Wülsten, Protektoren, Luftkammern und dichten Innengummis für schlauchlose Reifen ausgewählt ist.

**49.** Luftreifen, der eine Kautschukmischung nach einem der Ansprüche 1 bis 15 enthält.

**50.** Laufstreifen für Luftreifen auf der Basis einer Kautschukmischung nach einem der Ansprüche 1 bis 15.

**Fig. 1**

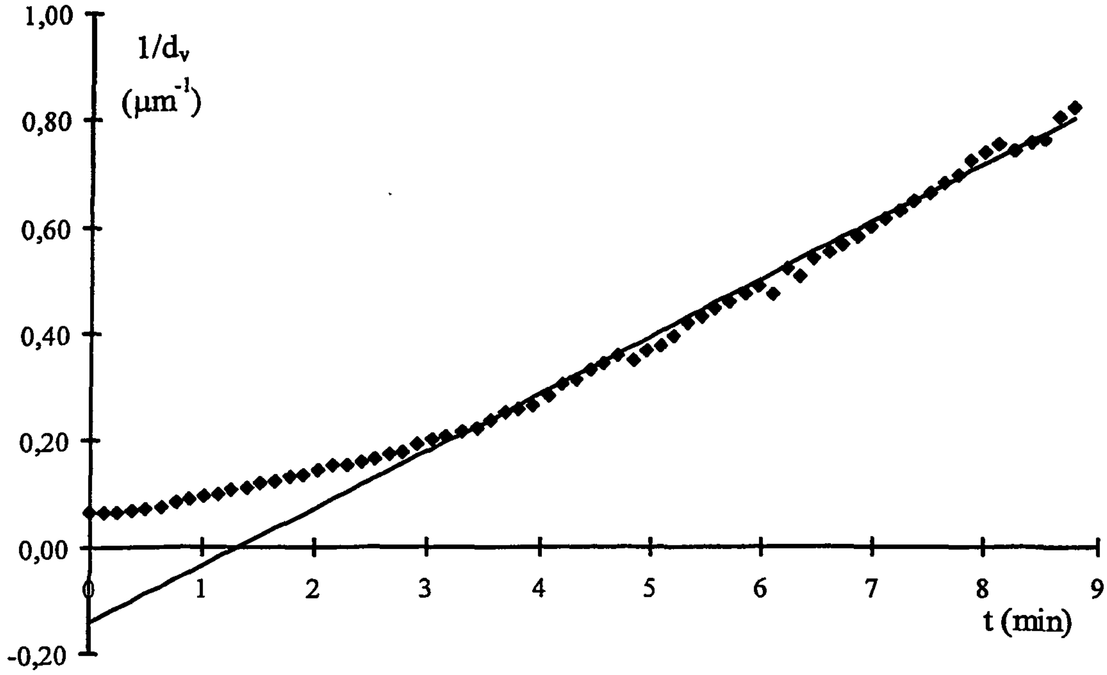
1,00
0,80
0,60
0,40
0,20
0,00
-0,20
1/$d_v$
(µm$^{-1}$)
0
1
2
3
4
5
6
7
8
9
t (min)

**Fig. 2**

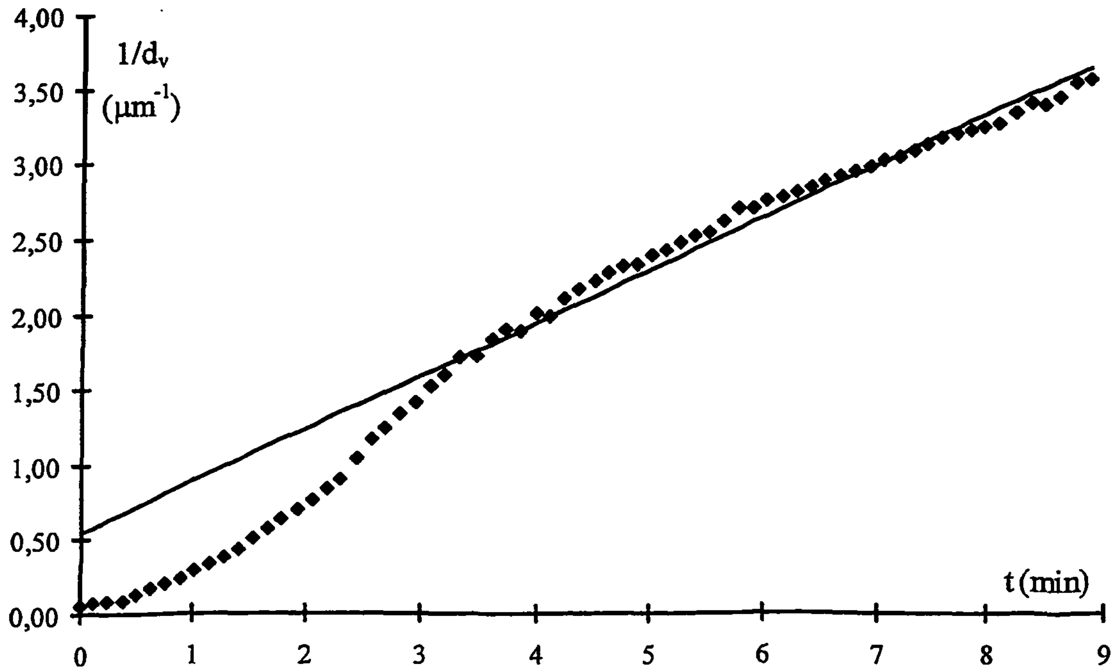
4,00
3,50
3,00
2,50
2,00
1,50
1,00
0,50
0,00
1/$d_v$
(µm$^{-1}$)
t (min)
0
1
2
3
4
5
6
7
8
9

**Fig. 3**

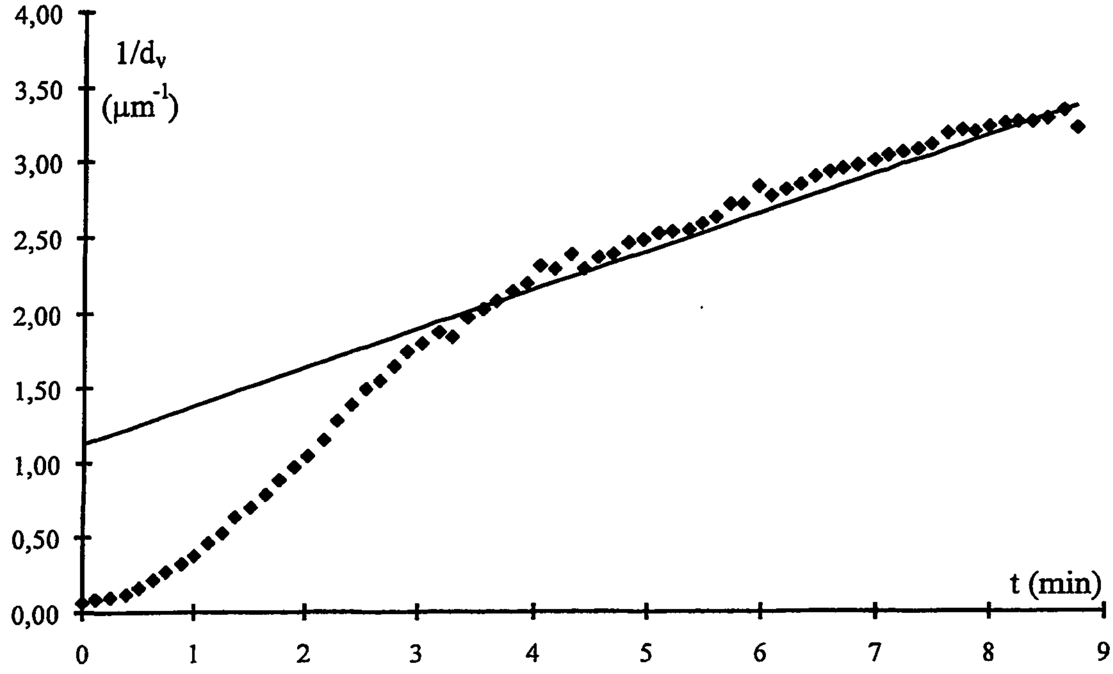
4,00
3,50
3,00
2,50
2,00
1,50
1,00
0,50
0,00
$1/d_v$
($\mu m^{-1}$)
t (min)
0
1
2
3
4
5
6
7
8
9

**Fig. 4**

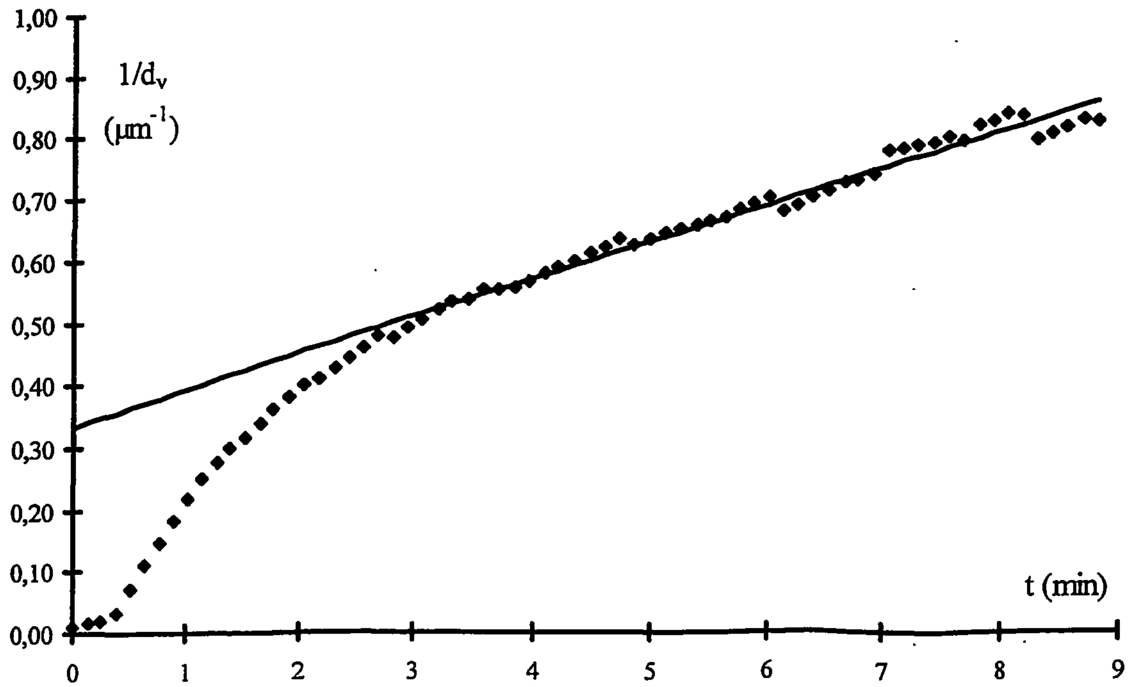
1,00
0,90
0,80
0,70
0,60
0,50
0,40
0,30
0,20
0,10
0,00
$1/d_v$
($\mu m^{-1}$)
t (min)
0
1
2
3
4
5
6
7
8
9

**Fig. 5**

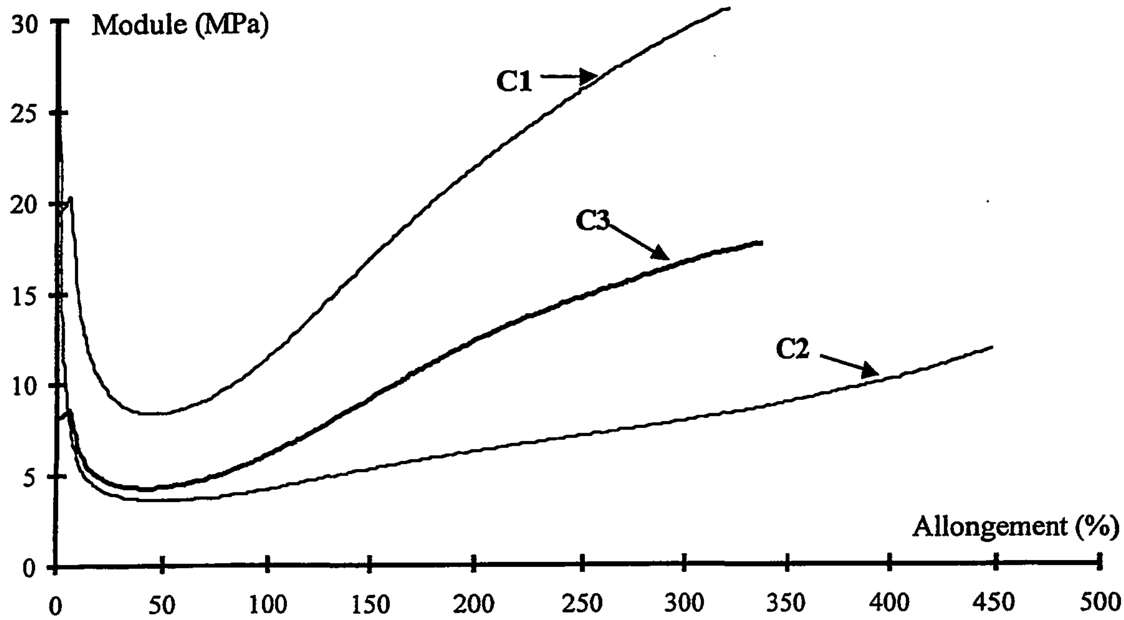
Module (MPa)
30
25
20
15
10
5
0
C1
C3
C2
Allongement (%)
0
50
100
150
200
250
300
350
400
450
500

**Fig. 6**

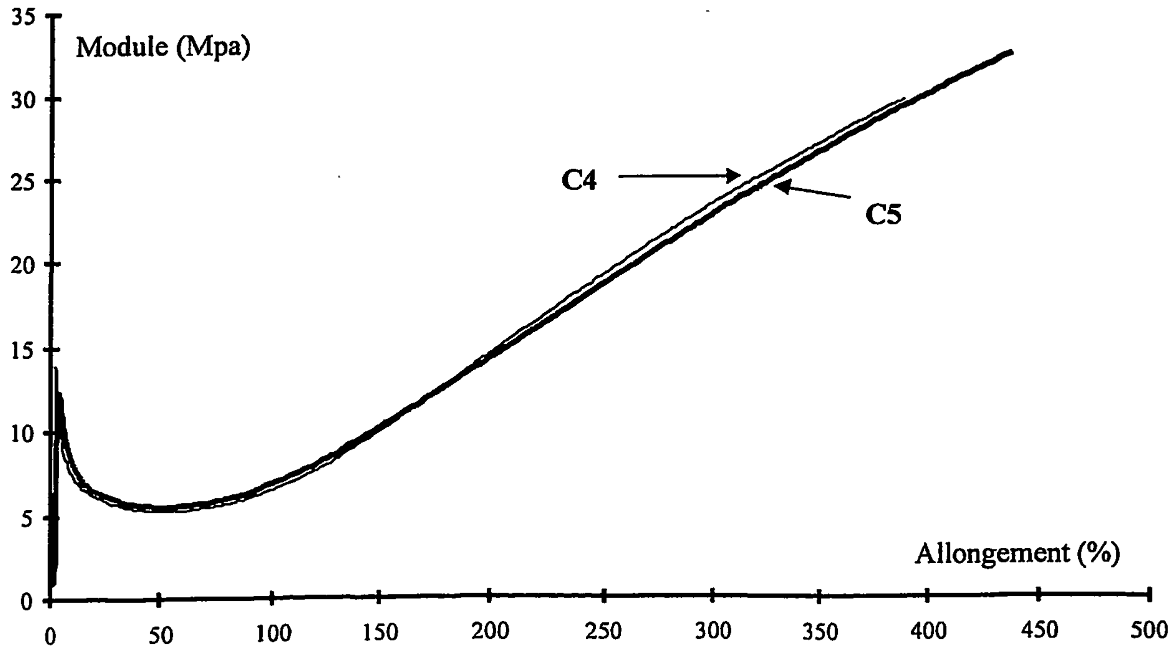
Module (Mpa)
35
30
25
20
15
10
5
0
C4
C5
Allongement (%)
0
50
100
150
200
250
300
350
400
450
500

**Fig. 7**

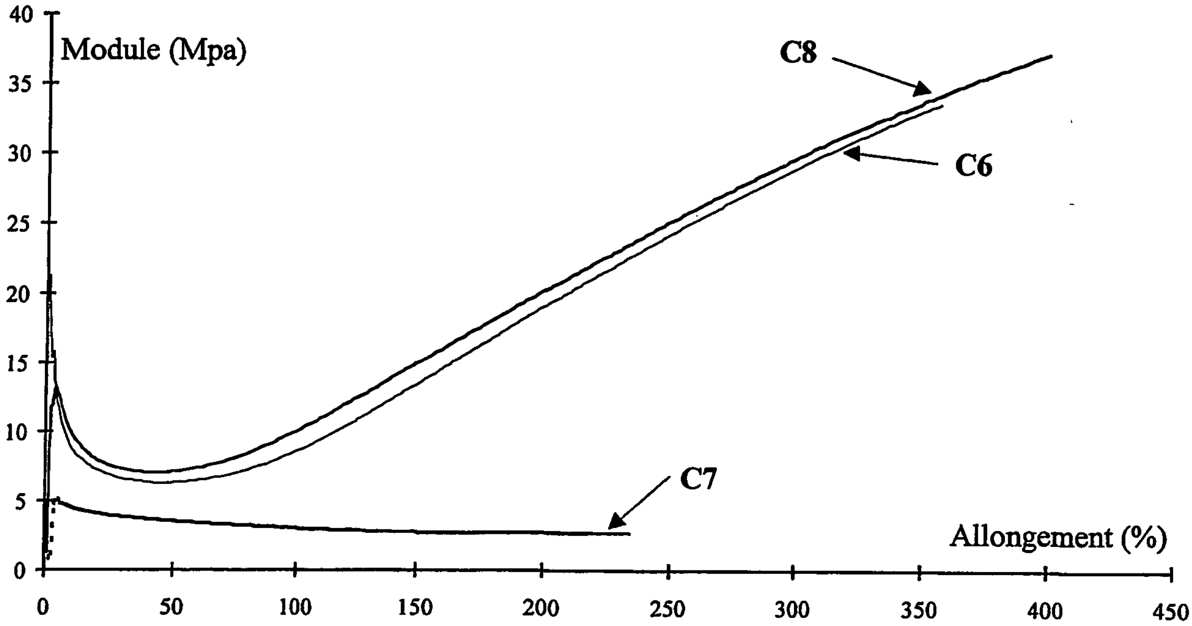
Module (Mpa)
C8
C6
C7
Allongement (%)
0
5
10
15
20
25
30
35
40
0
50
100
150
200
250
300
350
400
450

**Fig. 8**

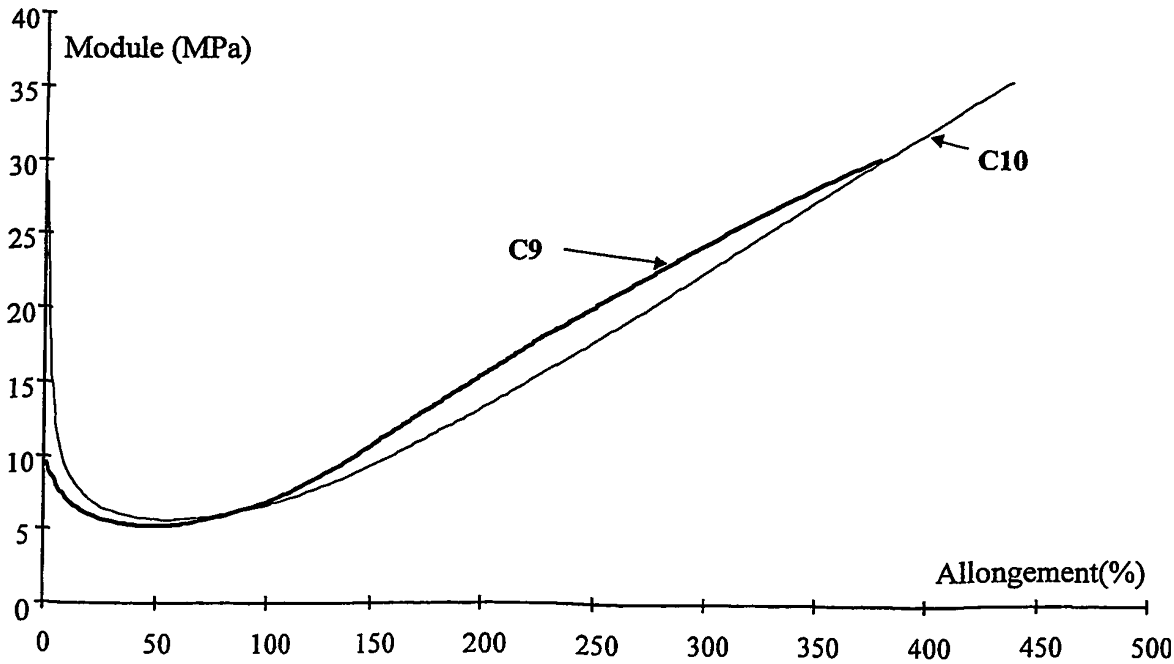
Module (MPa)
C10
C9
Allongement(%)
0
5
10
15
20
25
30
35
40
0
50
100
150
200
250
300
350
400
450
500

**Fig. 9**